# EUROPÄISCHE PATENTSCHRIFT

(11) **EP 1 683 801 B1**
(45) Veröffentlichungstag und Bekanntmachung des Hinweises auf die Patenterteilung: **12.09.2007**
(21) Anmeldenummer: 06100158.2
(22) Anmeldetag: 09.01.2006
(51) Int. Cl.: C07F 7/18

(54) **Mercaptosilane**
Mercaptosilanes
Mercaptosilanes

(30) Priorität: 20.01.2005 DE 102005002575; 13.07.2005 DE 102005032658; 03.12.2005 DE 102005057801
(43) Veröffentlichungstag der Anmeldung: 26.07.2006
(60) Teilanmeldung: 07106353.1
(73) Patentinhaber: Degussa GmbH, 40474 Düsseldorf (DE)
(72) Erfinder: Albert, Philipp, 79539, Lörrach (DE); Hasse, Andre, 52441, Linnich (DE); Klockmann, Oliver, 52382, Niederzier (DE); Korth, Karsten, 79639, Grenzach-Wyhlen (DE); Pieter, Reimund, 64625, Bensheim (DE)

(56) Entgegenhaltungen:
- EP-A- 1 285 926
- EP-A- 1 394 166
- EP-A- 1 439 205
- EP-A- 1 634 884
- EP-A- 1 637 535
- DATABASE CA [Online] CHEMICAL ABSTRACTS SERVICE, COLUMBUS, OHIO, US; HIRATA, YASUSHI ET AL: "Rubber compositions containing silanes for all-season tires with low rolling resistance" XP002377574 gefunden im STN Database accession no. 1988:114012 -& JP 62 181346 A (BRIDGESTONE CORP., JAPAN) 8. August 1987 (1987-08-08)

## Beschreibung

Die Erfindung betrifft Mercaptosilane, Verfahren zu ihrer Herstellung, sowie ihre Verwendung.

Es ist bekannt, Silane als Haftvermittler einzusetzen. So werden Aminoalkyltrialkoxysilane, Methacryloxyalkyltrialkoxysilane, Polysulfanalkyltrialkoxysilane und Mercaptoalkyltrialkoxysilane als Haftvermittler zwischen anorganischen Materialen und organischen Polymeren, als Vernetzungsmittel und Oberflächenmodifizierungsmittel eingesetzt (E.P. Plueddemann, "Silane Coupling Agents", 2nd Ed. Plenum Press 1982).

Diese Haftvermittler beziehungsweise Kupplungs- oder Verbindungsagenzien bilden sowohl zum Füllstoff als auch zum Elastomer Bindungen und bewirken somit zwischen der Füllstoffoberfläche und dem Elastomer eine gute Wechselwirkung.

Desweiteren ist bekannt, daß die Verwendung von handelsüblichen Silanhaftvermittlern (DE 22 55 577) mit drei Alkoxysubstituenten am Siliciumatom zur Freisetzung beträchtlicher Mengen an Alkohol während und nach der Anbindung an den Füllstoff führt. Da in der Regel Trimethoxy- und Triethoxy-substituierte Silane eingesetzt werden, werden die entsprechenden Alkohole, Methanol und Ethanol, in erheblichen Mengen freigesetzt.

Ferner ist aus DE 10015309 bekannt, dass die Verwendung eines Mercaptosilans in Kombination mit einem langkettigen Alkylsilan zu Gummimischungen mit einer erhöhten Verstärkung und einem erniedrigten Hystereseverlust führt. Das Alkylsilan ist notwendig, um eine sichere Verarbeitbarkeit der Kautschukmischung zu gewährleisten.

Es ist weiterhin bekannt, daß Methoxy- und Ethoxysubstituierte Silane reaktiver sind als die entsprechenden langkettigen Alkoxy-substituierten Silane und somit schneller an den Füllstoff anbinden können, so daß auf den Einsatz von Methoxy- und Ethoxy-Substituenten aus technischer und wirtschaftlicher Sicht bisher nicht verzichtet werden konnte.

Vollständig mit langkettigen Alkoxygruppen substituierte Silane, wie sie aus DE 10327624 bekannt sind, zeigen nur dann ein ausgewogenes Gummiwertebild, wenn eine ausreichende Mindestmischzeit gewährleistet wird.

Aus DE 10137809 sind Organosiliciumverbindungen der allgemeinen Formeln 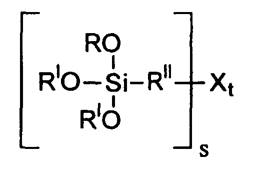 oder 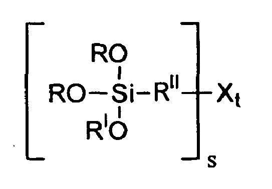 bekannt, wobei R eine Methyl- oder Ethyl-Gruppe ist,
R^{I} gleich oder verschieden und eine C₉-C₃₀ verzweigte oder unverzweigte einbindige Alkyl- oder Alkenyl-Gruppe, Arylgruppe, Aralkylgruppe, verzweigte oder unverzweigte C₂-C₃₀ Alkylethergruppe, verzweigte oder unverzweigte C₂-C₃₀ Alkylpolyethergruppe ist,
X ist NH₍₃₋ₛ₎, O (C=O) -R^{III}, SH, S, S(C=O)-R^{III} oder H.

Aus JP-A-63-181346 sind Mercaptosilane der Formel HS (CH₂)₃ Si (OR)ₙ (OMe)₃₋ₙ bekannt. Diese können in Kuntschukmischungen eingesetzt werden.

Aus JP 62-181346 sind mit Ruß gefüllte Kautschukmischungen, enthaltend Silane der Formel HS-(CH₂)₃-Si-(OR₁)ₙ (OCH₃)₃₋ₙ, bekannt.

Aus DE 10223658 sind Organosiliciumverbindungen der allgemeinen Formeln 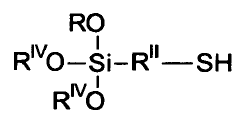 oder 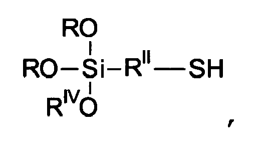 wobei R^{IV} gleich oder verschieden und eine C₉-C₃₀ verzweigte oder unverzweigte einbindige Alkylgruppe ist,
R^{IV} ein Gemisch ist und der Anteil einer Komponente des Gemisches 10 bis 50 Mol-% beträgt, bekannt,
die auch ohne den Zusatz von Alkylsilanen zu Gummimischungen mit einer erhöhten Verstärkung und einem erniedrigten Hystereseverlust führen, bei gleichzeitig gewährleisteter Verarbeitbarkeit der Gummimischung.

Aus DE 3426987 sind Organosiliciumverbindungen der allgemeinen Formel 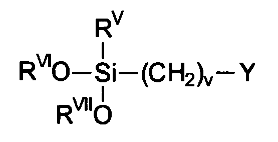 mit Y = -SH oder NHR^{VIII}, R^{V} = -CH₃, -C₂H₅ oder OR^{VI}, R^{VI} = (CH₂-CH₂-O)_{w}-R^{IX}, R^{VII} = Alkylrest mit 1 - 4 C-Atomen oder
R^{VI}, R^{IX} = gegebenenfalls substituierter Alkyl- oder Arylrest mit 1 - 10 C-Atomen,
bekannt, die zur Herstellung von lagerstabilen Kunstharzmassen verwendet werden.

Aus EP 0085831 sind Organosiliciumverbindungen der allgemeinen Formel

A- (CH₂)ₕ-Si (CH₃) ᵢBₖQ₃₋₍ᵢ₊ₖ₎,

in der A für einen Rest aus der Gruppe NHR^{x}, -SH, -O-CH (O) CH₂ oder -NH- (CH₂)₂-NH- (CH₂)₂-NH₂ steht,
B für einen Rest aus der Gruppe -OCH₃, -OC₂H₅ und -OC₃H₇ steht,
Q für den Rest -O-(CH₂-CH₂-O)₁-R^{XI} steht, wobei eines der H-Atome durch eine Methylgruppe ersetzt sein kann, 1 die Werte 2 oder 3 annehmen kann und R^{XI} für einen Alkylrest mit 1 bis 4 C-Atomen steht,
bekannt, die in Polyurethan-Dichtungsmassen zum Einsatz kommen.

Nachteil der bekannten Mercaptosilane mit langkettigen Alkoxygruppen ist ihre geringe Reaktivität in Bezug auf die Ankopplung an die Kieselsäure. Die durch den Zusatz von Mercaptosilanen in Kautschukmischungen erreichte hohe Verstärkung, der geringe Hystereseverlust sowie der hohe Abriebwiderstand werden nur dann erreicht, wenn eine ausreichende Mischzeit gewährleistet wird. Aus wirtschaftlicher und technischer Sicht ist aber eine kurze Mischzeit unverzichtbar, so daß auf den Einsatz vollständig mit Methoxy- und/oder Ethoxygruppen substituierter Mercaptosilane bislang nicht verzichtet werden kann.

Aufgabe der vorliegenden Erfindung ist es, Mercaptosilane zur Verfügung zu stellen, die auch bei wirtschaftlich vertretbaren, kurzen Mischzeiten bei gewährleisteter Verarbeitung zu einer hohen Verstärkung, einem geringen Verarbeitung zu einer hohen Verstärkung, einem geringen Hystereseverlust und einem hohen Abriebwiderstand, bei gleichzeitig gegenüber trimethoxy- und triethoxysubstituierten Mercaptosilanen reduzierter Alkoholemission, führen.

Gegenstand der Erfindung sind Mercaptosilane der allgemeinen Formel I 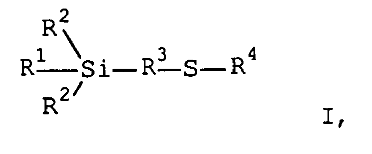 wobei R¹ eine Alkylpolyethergruppe -O-(R⁵-O)ₘ-R⁶ ist, mit R⁵ gleich oder verschieden, eine verzweigte oder unverzweigte, gesättigte oder ungesättigte, aliphatische zweibindige C1-C30 Kohlenwasserstoffgruppe, vorzugsweise CH₂-CH₂ , CH₂-CH(CH₃), -CH(CH₃)-CH₂-, CH₂-CH₂-CH₂ oder Gemische hiervon, m im Mittel 1 bis 30, bevorzugt 2 bis 20, besonders bevorzugt 2 bis 15, ganz besonders bevorzugt 3 bis 10,
außerordentlich bevorzugt 3,5 bis 7,9, ist, und R⁶ aus mindestens 11, vorzugsweise mindestens 12, C-Atomen besteht und eine unsubstituierte oder substituierte, verzweigte oder unverzweigte einbindige Alkyl-, Alkenyl, Aryl oder Aralkylgruppe ist,
R² verschieden und eine R¹-, C1-C12-Alkyl- oder R⁷O-Gruppe ist oder R² gleich und eine C1-C12-Alkyl-oder R⁷ O-Gruppe ist, mit R⁷ gleich H, Ethyl, Propyl, C9-C30 verzweigten oder unverzweigten einbindigen Alkyl-, Alkenyl-, Aryl-, Aralkylgruppe oder (R⁸)₃Si-Gruppe, mit R⁸ gleich C1-C30 verzweigte oder unverzweigte Alkyl- oder Alkenyl-Gruppe,
R³ eine verzweigte oder unverzweigte, gesättigte oder ungesättigte, aliphatische, aromatische oder gemischt aliphatische /aromatische zweibindige C1-C30 Kohlenwasserstoffgruppe und
R⁴ gleich H ist.

Das Mercaptosilan der allgemeinen Formel I kann ein Gemisch aus unterschiedlichen Mercaptosilanen der allgemeinen Formel I oder deren Kondensationsprodukten sein.

Die Mercaptosilane der allgemeinen Formel I können Verbindungen sein, wobei R¹ eine Alkylpolyethergruppe -0-(R⁵-O)ₘ-R⁶ ist, mit R⁵ gleich oder verschieden, eine verzweigte oder unverzweigte, gesättigte oder ungesättigte, aliphatische zweibindige C1-C30 Kohlenwasserstoffgruppe, m im Mittel 1 bis 30 ist, und R⁶ aus mindestens 11 C-Atomen besteht und eine unsubstituierte oder substituierte, verzweigte oder unverzweigte einbindige Alkyl-, Alkenyl, Aryl oder Aralkylgruppe ist,
R² gleich und eine C1-C12-Alkyl- oder R⁷O-Gruppe ist, mit R⁷ gleich H, Ethyl, Propyl, C9-C30 verzweigten oder unverzweigten einbindigen Alkyl-, Alkenyl-, Aryl-, Aralkylgruppe oder (R⁸)₃Si-Gruppe, mit R⁸ gleich C1-C30 verzweigte oder unverzweigte Alkyl- oder Alkenyl-Gruppe,
R³ eine verzweigte oder unverzweigte, gesättigte oder ungesättigte, aliphatische, aromatische oder gemischt aliphatische /aromatische zweibindige C1-C30 Kohlenwasserstoffgruppe und
R⁴ gleich H ist, mit R⁹ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe.

Die Mercaptosilane der allgemeinen Formel I können Verbindungen sein, wobei R¹ gleich
-O-(C₂H₄-O)₅-C₁₁H₂₃, -O-(C₂H₄-O)₅-C₁₂H₂₅, -O-(C₂H₄-O)₅-C₁₃H₂₇, -0-(C₂H₄-O)₅-C₁₄H₂₉, -O-(C₂H₄-O)₅-C₁₅H₃₁, -O-(C₂H₄-O)₃-C₁₃H₂₇, -O-(C₂H₄-O)₄-C₁₃H₂₇, -O-(C₂H₄-O)₆-C₁₃H₂₇, -O-(C₂H₄-O)₇-C₁₃H₂₇, -O-(CH₂CH₂-O)₅- (CH₂)₁₀CH₃, -O-(CH₂CH₂-O)₅-(CH₂)₁₁CH₃, -O-(CH₂CH₂-O)₅-(CH₂)₁₂CH₃, -O-(CH₂CH₂-O)₅-(CH₂)₁₃CH₃, -O-(CH₂CH₂-O)₅-(CH₂)₁₄CH₃, -O- (CH₂CH₂-O)₃- (CH₂) ₁₂CH₃, -O- (CH₂CH₂-O)₄- (CH₂) ₁₂CH₃, -0- (CH₂CH₂-O)₆- (CH₂) ₁₂CH₃, -0- (CH₂CH₂-O)₇- (CH₂) ₁₂CH₃, 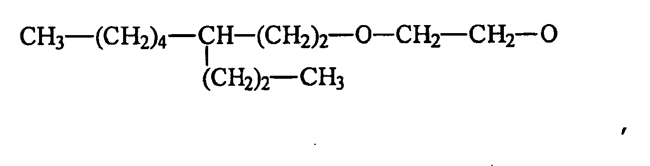 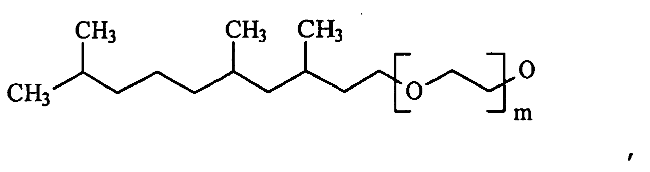 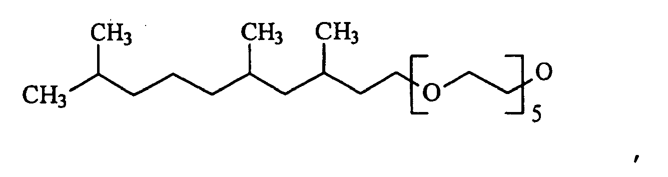 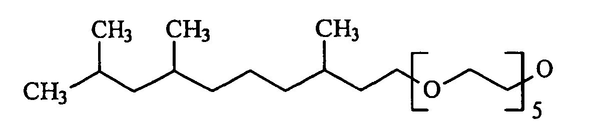 oder 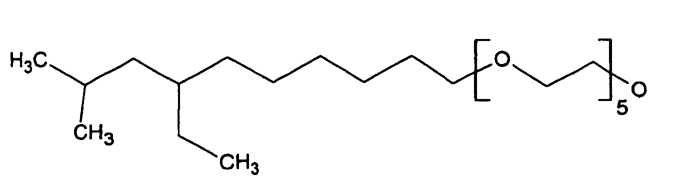 ist,
R² verschieden und eine R¹-, C1-C12-Alkyl- oder R⁷O-Gruppe ist, mit R⁷ gleich H, Ethyl, Propyl, C9-C30 verzweigten oder unverzweigten einbindigen Alkyl-, Alkenyl- , Aryl-, Aralkylgruppe oder (R⁸) ₃Si-Gruppe, mit R⁸ gleich C1-C30 verzweigte oder unverzweigte Alkyl- oder Alkenyl-Gruppe,
R³ eine verzweigte oder unverzweigte, gesättigte oder ungesättigte, aliphatische, aromatische oder gemischt aliphatische /aromatische zweibindige C1-C30 Kohlenwasserstoffgruppe und
R⁴ gleich H oder ist, mit R⁹ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe.

Bevorzugte Verbindungen der Formel I mit R⁴ = H können sein:
[(C₁₁H₂₃O- (CH₂-CH₂O) ₂] (EtO) ₂Si (CH₂) ₃SH,
[(C₁₁H₂₃O- (CH₂-CH₂O) ₃] (EtO) ₂Si (CH₂) ₃SH,
[(C₁₁H₂₃O- (CH₂-CH₂O)₄] (EtO)₂Si (CH₂) ₃SH,
[(C₁₁H₂₃O- (CH₂-CH₂O)₅] (EtO)₂Si (CH₂) ₃SH,
[(C₁₁H₂₃O- (CH₂-CH₂O)₆] (EtO)₂Si (CH₂) ₃SH,

[(C₁₂H₂₅O- (CH₂-CH₂O)₂](EtO)₂Si (CH₂)₃SH,
[C₁₂H₂₅O-(CH₂-CH₂O)₃](EtO)₂Si (CH₂)₃SH,
[(C₁₂H₂₅O-(CH₂-CH₂O)₄](EtO)₂Si (CH₂)₃SH,
[(C₁₂H₂₅O-(CH₂-CH₂O)₅](EtO)₂Si(CH₂)₃SH,
[(C₁₂H₂₅O-(CH₂-CH₂O)₆] (EtO)₂Si (CH₂) ₃SH,

[(C₁₃H₂₇O-(CH₂-CH₂O)₂](EtO)₂Si (CH₂)₃SH,
[(C₁₃H₂₇O-(CH₂-CH₂O)₃] (EtO)₂Si (CH₂) ₃SH,
[(C₁₃H₂₇O- (CH₂-CH₂O)₄] (EtO) ₂Si (CH₂) ₃SH,
[(C₁₃H₂₇O- (CH₂-CH₂O) ₅] (EtO) ₂Si (CH₂) ₃SH,
[(C₁₃H₂₇O- (CH₂-CH₂O) ₆] (EtO) ₂Si (CH₂) ₃SH,

[(C₁₄H₂₉O- (CH₂-CH₂O) ₂] (EtO) ₂Si (CH₂) ₃SH,
[(C₁₄H₂₉O- (CH₂-CH₂O) ₃] (EtO) ₂Si (CH₂) ₃SH,
[(C₁₄H₂₉O- (CH₂-CH₂O) ₄] (EtO) ₂Si (CH₂) ₃SH,
[(C₁₉H₂₉O- (CH₂-CH₂O) ₅] (EtO) ₂Si (CH₂) ₃SH,
[(C₁₄H₂₉O- (CH₂-CH₂O) ₆] (EtO) ₂Si (CH₂) ₃SH,

[(C₁₅H₃₁O- (CH₂-CH₂O) ₂] (EtO) ₂Si (CH₂) ₃SH,
[(C₁₅H₃₁O- (CH₂-CH₂O) ₃] (EtO) ₂Si (CH₂) ₃SH,
[(C₁₅H₃₁O- (CH₂-CH₂O) ₄] (EtO) ₂Si (CH₂) ₃SH,
[(C₁₅H₃₁O- (CH₂-CH₂O) ₅] (EtO) ₂Si (CH₂) ₃SH,
[(C₁₅H₃₁O- (CH₂-CH₂O) ₆] (EtO) ₂Si (CH₂) ₃SH,

[(C₁₆H₃₃O- (CH₂-CH₂O) ₂] (EtO) ₂Si (CH₂) ₃SH,
[(C₁₆H₃₃O- (CH₂-CH₂O) ₃] (EtO) ₂Si (CH₂) ₃SH,
[(C₁₆H₃₃O- (CH₂-CH₂O) ₄] (EtO) ₂Si (CH₂) ₃SH,
[(C₁₆H₃₃O- (CH₂-CH₂O) ₅] (EtO) ₂Si (CH₂) ₃SH,
[(C₁₆H₃₃O- (CH₂-CH₂O) ₆] (EtO) ₂Si (CH₂) ₃SH,

[(C₁₇H₃₅O- (CH₂-CH₂O) ₂] (EtO) ₂Si (CH₂) ₃SH,
[(C₁₇H₃₅O- (CH₂-CH₂O) ₃] (EtO) ₂Si (CH₂) ₃SH,
[(C₁₇H₃₅O- (CH₂-CH₂O) ₄] (EtO) ₂Si (CH₂) ₃SH,
[(C₁₇H₃₅O- (CH₂-CH₂O)₅] (EtO) ₂Si (CH₂) ₃SH,
[(C₁₇H₃₅O- (CH₂-CH₂O)₆] (EtO) ₂Si (CH₂) ₃SH,

[(C₁₁H₂₃O- (CH₂-CH₂O)₂] ₂ (EtO) Si (CH₂) ₃SH,
[(C₁₁H₂₃O- (CH₂-CH₂O) ₃] ₂(EtO) Si (CH₂) ₃SH,
[(C₁₁H₂₃O- (CH₂-CH₂O) ₄] ₂ (EtO) Si (CH₂) ₃SH,
[(C₁₁H₂₃O- (CH₂-CH₂O) ₅] ₂ (EtO) Si (CH₂) ₃SH,
[(C₁₁H₂₃O- (CH₂-CH₂O) ₆] ₂ (EtO) Si (CH₂) ₃SH,

[(C₁₂H₂₅O- (CH₂-CH₂O) ₂] ₂ (EtO) Si (CH₂) ₃SH,
[(C₁₂H₂₅O- (CH₂-CH₂O) ₃] ₂ (EtO) Si (CH₂) ₃SH,
[(C₁₂H₂₅O- (CH₂-CH₂O) ₄] ₂ (EtO) Si (CH₂) ₃SH,
[(C₁₂H₂₅O- (CH₂-CH₂O) ₅] ₂ (EtO) Si (CH₂) ₃SH,
[(C₁₂H₂₅O- (CH₂-CH₂O) ₆] ₂ (EtO) Si (CH₂) ₃SH,

[(C₁₃H₂₇O- (CH₂-CH₂O) ₂] ₂ (EtO) Si (CH₂) ₃SH,
[(C₁₃H₂₇O- (CH₂-CH₂O) ₃] ₂(EtO) Si (CH₂) ₃SH,
[(C₁₃H₂₇O- (CH₂-CH₂O) ₄] ₂ (EtO) Si (CH₂) ₃SH,
[(C₁₃H₂₇O- (CH₂-CH₂O) ₅] ₂ (EtO) Si (CH₂) ₃SH,
[(C₁₃H₂₇O- (CH₂-CH₂O) ₆] ₂ (EtO) Si (CH₂) ₃SH,

[(C₁₄H₂₉O- (CH₂-CH₂O) ₂] ₂ (EtO) Si (CH₂) ₃SH,
[(C₁₄H₂₉O- (CH₂-CH₂O) ₃] ₂ (EtO) Si (CH₂) ₃SH,
[(C₁₄H₂₉O- (CH₂-CH₂O) ₄] ₂ (EtO) Si (CH₂) ₃SH,
[(C₁₄H₂₉O- (CH₂-CH₂O) ₅] ₂ (EtO) Si (CH₂) ₃SH,
[(C₁₄H₂₉O- (CH₂-CH₂O) ₆] ₂ (EtO) Si (CH₂) ₃SH,

[(C₁₅H₃₁O- (CH₂-CH₂O)₂] ₂ (EtO) Si (CH₂) ₃SH,
[(C₁₅H₃₁O- (CH₂-CH₂O)₃] ₂ (EtO) Si (CH₂) ₃SH,
[(C₁₅H₃₁O- (CH₂-CH₂O)₄] ₂ (EtO) Si (CH₂) ₃SH,
[(C₁₅H₃₁O- (CH₂-CH₂O) ₅] ₂ (EtO) Si (CH₂) ₃SH,
[(C₁₅H₃₁O- (CH₂-CH₂O) ₆] ₂ (EtO) Si (CH₂) ₃SH,

[(C₁₆H₃₃O- (CH₂-CH₂O) ₂] ₂(EtO) Si (CH₂) ₃SH,
**[**(C₁₆H₃₃O- (CH₂-CH₂O) ₃] ₂ (EtO) Si (CH₂) ₃SH,
[(C₁₆H₃₃O- (CH₂-CH₂O) ₄] ₂ (EtO) Si (CH₂) ₃SH,
[(C₁₆H₃₃O- (CH₂-CH₂O) ₅] ₂ (EtO) Si (CH₂) ₃SH,
[(C₁₆H₃₃O- (CH₂-CH₂O) ₆]₂ (EtO) Si (CH₂) ₃SH,

[(C₁₇H₃₅O- (CH₂-CH₂O)₂]₂ (EtO) Si (CH₂) ₃SH,
[(C₁₇H₃₅O- (CH₂-CH₂O)₃]₂(EtO) Si (CH₂) ₃SH,
[(C₁₇H₃₅O- (CH₂-CH₂O) ₄]₂ (EtO) Si (CH₂) ₃SH,
[(C₁₇H₃₅O- (CH₂-CH₂O) ₅]₂ (EtO) Si (CH₂) ₃SH,
[(C₁₇H₃₅O- (CH₂-CH₂O) ₆]₂ (EtO) Si (CH₂) ₃SH,

[(C₁₁H₂₃O-(CH₂-CH₂O)₂] (EtO) ₂Si-CH₂-CH (CH₃) -CH₂-SH,
[(C₁₁H₂₃O- (CH₂-CH₂O) ₃] (EtO) ₂Si-CH₂-CH (CH₃) -CH₂-SH,
[(C₁₁H₂₃O- (CH₂-CH₂O) ₄] (EtO)₂Si-CH₂-CH (CH₃)-CH₂-SH,
[(C₁₁H₂₃O- (CH₂-CH₂O) ₅] (EtO) ₂Si-CH₂-CH (CH₃) -CH₂-SH,
[(C₁₁H₂₃O- (CH₂-CH₂O) ₆] (EtO) ₂Si-CH₂-CH(CH₃)-CH₂-SH,

[(C₁₂H₂₅O- (CH₂-CH₂O) ₂] (EtO)₂Si-CH₂-CH(CH₃)-CH₂-SH,
[(C₁₂H₂₅O- (CH₂-CH₂O) ₃] (EtO) ₂Si-CH₂-CH (CH₃) -CH₂-SH,
[(C₁₂H₂₅O- (CH₂-CH₂O) ₄] (EtO) ₂Si -CH₂-CH(CH₃)-CH₂-SH,
[(C₁₂H₂₅O- (CH₂-CH₂O) ₅] (EtO) ₂Si-CH₂-CH (CH₃) -CH₂-SH,
[(C₁₂H₂₅O- (CH₂-CH₂O) ₆] (EtO)₂Si-CH₂-CH(CH₃)-CH₂-SH,

[(C₁₃H₂₇O- (CH₂-CH₂O) ₂] (EtO) ₂Si-CH₂-CH (CH₃) -CH₂-SH,
[(C₁₃H₂₇O- (CH₂-CH₂O) ₃] (EtO) ₂Si-CH₂-CH (CH₃) -CH₂-SH,
[(C₁₃H₂₇O- (CH₂-CH₂O) ₄] (EtO) ₂Si-CH₂-CH (CH₃) -CH₂-SH,
[(C₁₃H₂₇O- (CH₂-CH₂O) ₅] (EtO) ₂Si-CH₂-CH (CH₃) -CH₂-SH,
[(C₁₃H₂₇O- (CH₂-CH₂O) ₆] (EtO) ₂Si-CH₂-CH (CH₃) -CH₂-SH,

[(C₁₄H₂₉O- (CH₂-CH₂O) ₂] (EtO) ₂Si-CH₂-CH (CH₃) -CH₂-SH,
[(C₁₄H₂₉O- (CH₂-CH₂O) ₃] (EtO) ₂Si-CH₂-CH (CH₃) -CH₂-SH,
[(C₁₄H₂₉O- (CH₂-CH₂O) ₄] (EtO) ₂Si-CH₂-CH (CH₃) -CH₂-SH,
[(C₁₄H₂₉O- (CH₂-CH₂O) ₅] (EtO)₂Si-CH₂-CH(CH₃) -CH₂-SH,
[(C₁₄H₂₉O- (CH₂-CH₂O) ₆] (EtO) ₂Si-CH₂-CH (CH₃) -CH₂-SH,

[(C₁₅H₃₁O- (CH₂-CH₂O) ₂] (EtO) ₂Si-CH₂-CH (CH₃) -CH₂-SH,
[(C₁₅H₃₁O- (CH₂-CH₂O) ₃] (EtO) ₂Si-CH₂-CH (CH₃) -CH₂-SH,
[(C₁₅H₃₁O- (CH₂-CH₂O) ₄] (EtO) ₂Si-CH₂-CH (CH₃) -CH₂-SH,
[(C₁₅H₃₁O- (CH₂-CH₂O) ₅] (EtO) ₂Si-CH₂-CH (CH₃) -CH₂-SH,
[(C₁₅H₃₁O- (CH₂-CH₂O)₆] (EtO) ₂Si-CH₂-CH (CH₃) -CH₂-SH,

[(C₁₆H₃₃O- (CH₂-CH₂O)₂] (EtO) ₂Si-CH₂-CH (CH₃) -CH₂-SH,
[(C₁₆H₃₃O- (CH₂-CH₂O) ₃] (EtO) ₂Si-CH₂-CH (CH₃) -CH₂-SH,
[(C₁₆H₃₃O- (CH₂-CH₂O) ₄] (EtO) ₂Si-CH₂-CH (CH₃) -CH₂-SH,
[(C₁₆H₃₃O- (CH₂-CH₂O) ₅] (EtO) ₂Si-CH₂-CH (CH₃) -CH₂-SH,
[(C₁₆H₃₃O- (CH₂-CH₂O) ₆] (EtO) ₂Si-CH₂-CH (CH₃) -CH₂-SH,

[(C₁₇H₃₅O- (CH₂-CH₂O) ₂ (EtO) ₂Si-CH₂-CH (CH₃) -CH₂-SH,
[(C₁₇H₃₅O- (CH₂-CH₂O) ₃] (EtO) ₂Si-CH₂-CH (CH₃) -CH₂-SH,
[(C₁₇H₃₅O- (CH₂-CH₂O) ₄ (EtO) ₂Si-CH₂-CH (CH₃) -CH₂-SH,
[(C₁₇H₃₅O- (CH₂-CH₂O) ₅] (EtO) ₂Si-CH₂-CH (CH₃) -CH₂-SH,
[(C₁₇H₃₅O- (CH₂-CH₂O) ₆] (EtO) ₂Si-CH₂-CH (CH₃) -CH₂-SH,

[(C₁₁H₂₃O- (CH₂-CH₂O) _{2 2}(EtO) Si-CH₂-CH (CH₃) -CH₂-SH,
[(C₁₁H₂₃O- (CH₂-CH₂O) ₃] ₂ (EtO) Si-CH₂-CH (CH₃) -CH₂-SH,
[(C₁₁H₂₃O- (CH₂-CH₂O) ₄] ₂(EtO) Si-CH₂-CH (CH₃) -CH₂-SH,
[(C₁₁H₂₃O- (CH₂-CH₂O) ₅] ₂(EtO) Si-CH₂-CH (CH₃) -CH₂-SH,
[(C₁₁H₂₃O- (CH₂-CH₂O) ₆] ₂(EtO) Si-CH₂-CH (CH₃) -CH₂-SH,

[(C₁₂H₂₅O- (CH₂-CH₂O) ₂] ₂ (EtO) Si-CH₂-CH (CH₃) -CH₂-SH,
[(C₁₂H₂₅O- (CH₂-CH₂O) ₃] ₂ (EtO) Si-CH₂-CH (CH₃) -CH₂-SH,
[(C₁₂H₂₅O- (CH₂-CH₂O) ₄] ₂ (EtO) Si-CH₂-CH (CH₃) -CH₂-SH,
[(C₁₂H₂₅O- (CH₂-CH₂O) ₅] ₂ (EtO) Si-CH₂-CH (CH₃) -CH₂-SH,
[(C₁₂H₂₅O- (CH₂-CH₂O) ₆] ₂ (EtO) Si-CH₂-CH (CH₃) -CH₂-SH,

[(C₁₃H₂₇O-(CH₂-CH₂O)₂]₂ (EtO) Si-CH₂-CH (CH₃)-CH₂-SH,
(C₁₃H₂₇O- (CH₂-CH₂O) ₃](EtO) Si-CH₂-CH (CH₃) -CH₂-SH,
(C₁₃H₂₇O- (CH₂-CH₂O) ₄]₂ (EtO) Si-CH₂-CH (CH₃) -CH₂-SH,
[(C₁₃H₂₇O-(CH₂-CH₂O) ₅]₂ (EtO) Si-CH₂-CH (CH₃) -CH₂-SH,
[(C₁₃H₂₇O- (CH₂-CH₂O) ₆]₂ (EtO) Si-CH₂-CH (CH₃) -CH₂-SH,

[(C₁₄H₂₉O- (CH₂-CH₂O) ₂]₂ (EtO) Si-CH₂-CH (CH₃) -CH₂-SH,
[(C₁₄H₂₉O- (CH₂-CH₂O) ₃]₂ (EtO) Si-CH₂-CH (CH₃) -CH₂-SH,
[(C₁₄H₂₉O- (CH₂-CH₂O) ₄]₂ (EtO) Si-CH₂-CH (CH₃) -CH₂-SH,
[(C₁₄H₂₉O- (CH₂-CH₂O) ₅]₂ (EtO) Si-CH₂-CH (CH₃) -CH₂-SH,
[(C₁₄H₂₉O- (CH₂-CH₂O) ₆]₂ (EtO) Si-CH₂-CH (CH₃) -CH₂-SH,

[(C₁₅H₃₁O- (CH₂-CH₂O) ₂]₂ (EtO) Si-CH₂-CH (CH₃) -CH₂-SH,
[(C₁₅H₃₁O- (CH₂-CH₂O) ₃]₂ (EtO) Si-CH₂-CH (CH₃) -CH₂-SH,
[(C₁₅H₃₁O-(CH₂-CH₂O)₄]₂(EtO)Si-CH₂-CH(CH₃)-CH₂-SH,
[(C₁₅H₃₁O-(CH₂-CH₂O)₅]₂(EtO)Si-CH₂-CH(CH₃)-CH₂-SH,
[(C₁₅H₃₁O-(CH₂-CH₂O)₆]₂(EtO)Si-CH₂-CH(CH₃)-CH₂-SH,

[(C₁₆H₃₃O-(CH₂-CH₂O)₂]₂(EtO)Si-CH₂-CH(CH₃)-CH₂-SH,
[(C₁₆H₃₃O- (CH₂-CH₂O) ₃] ₂ (EtO) Si-CH₂-CH (CH₃) -CH₂-SH,
[(C₁₆H₃₃O- (CH₂-CH₂O) ₄] ₂ (EtO) Si-CH₂-CH (CH₃) -CH₂-SH,
[(C₁₆H₃₃O- (CH₂-CH₂O) ₅] ₂ (EtO) Si-CH₂-CH (CH₃) -CH₂-SH,
[(C₁₆H₃₃O- (CH₂-CH₂O) ₆] ₂ (EtO) Si-CH₂-CH (CH₃) -CH₂-SH,

[(C₁₇H₃₅O- (CH₂-CH₂O) ₂] ₂ (EtO) Si-CH₂-CH (CH₃) -CH₂-SH,
[(C₁₇H₃₅O- (CH₂-CH₂O) ₃] ₂ (EtO) Si-CH₂-CH (CH₃) -CH₂-SH,
[(C₁₇H₃₅O- (CH₂-CH₂O) ₄] ₂ (EtO) Si-CH₂-CH (CH₃) -CH₂-SH,
[(C₁₇H₃₅O- (CH₂-CH₂O) ₅] ₂ (EtO) Si-CH₂-CH (CH₃) -CH₂-SH,
[(C₁₇H₃₅O- (CH₂-CH₂O) ₆] ₂ (EtO) Si-CH₂-CH (CH₃) -CH₂-SH,
wobei R⁶ verzweigt oder unverzweigt sein kann.
R⁶ kann bevorzugt C₁₂ bis C₁₇, ganz besonders bevorzugt C₁₂ bis C₁₆, außerordentlich bevorzugt C₁₂ bis C₁₄, unsubstituiertes oder substituiertes, verzweigtes oder unverzweigtes einbindiges Alkyl sein.
R⁶ kann eine -C₁₁H₂₃, -C₁₂H₂₅, -C₁₃H₂₇, -C₁₄H₂₉, -C₁₅H₃₁, -C₁₆H₃₃ oder -C₁₇H₃₅ Alkylgruppe sein.
R⁶ kann bevorzugt C₁₁ bis C₃₅, besonders bevorzugt C₁₁ bis C₃₀, ganz besonders bevorzugt C₁₂ bis C₃₀, außerordentlich bevorzugt C₁₃ bis C₂₀, unsubstituiertes oder substituiertes, verzweigtes oder unverzweigtes einbindiges Alkenyl sein.
R⁶ kann bevorzugt C₁₁ bis C₁₄ und/oder C₁₆ bis C₃₀, ganz besonders bevorzugt C₁₁ bis C₁₄ und/oder C₁₆ bis C₂₅, außerordentlich bevorzugt C₁₂ bis C₁₄ und/oder C₁₆ bis C₂₀, unsubstituiertes oder substituiertes, verzweigtes oder unverzweigtes einbindiges Aralkyl sein.
R⁶ kann als Alkenyl C₁₁H₂₁, -C₁₂H₂₃, -C₁₃H₂₅, -C₁₄H₂₇, -C₁₅H₂₉,-C₁₆H₃₁ oder -C₁₇H₃₃ sein.
R¹ kann ein alkoxyliertes Ricinusöl (z.B. CAS 61791-12-6) sein.
R¹ kann ein alkoxyliertes Oleylamin (z.B. CAS 26635-93-8) sein.

Die Polyethergruppe (R⁵O)ₘ kann statistische Ethylen- und Propylenoxideinheiten oder Polyetherblöcke aus Polyethylenoxid und Polypropylenoxid enthalten.

Die Polyethergruppe kann eine Molekulargewichtsverteilung aufweisen.

Das Mercaptosilan der allgemeinen Formel I kann ein Gemisch aus unterschiedlichen Mercaptosilanen der allgemeinen Formel I sein, wobei R⁶ aus unterschiedlichen C-Atomkettenlängen besteht und eine Molekulargewichtsverteilung aufweist.

Die Polyethergruppe (R⁵-O)ₘ kann bevorzugt sein:
(-O-CH₂-CH₂-) ₐ,
(-O-CH(CH₃)-CH₂-)ₐ,
(-O-CH₂-CH (CH₃)-) ₐ,
(-O-CH₂-CH₂-) ₐ (-O-CH (CH₃) -CH₂-),
(-O-CH₂-CH₂-) (-O-CH (CH₃)-CH₂-) ₐ,
(-O-CH₂-CH₂-)ₐ(-O-CH₂-CH(CH₃)-),
(-O-CH₂-CH₂-) (-O-CH₂-CH (CH₃)-)ₐ,
(-O-CH(CH₃)-CH₂-)ₐ(-O-CH₂-CH(CH₃)-),
(-O-CH (CH₃) -CH₂-) (-O-CH₂-CH (CH₃)-) ₐ,
(-O-CH₂-CH₂-) ₐ(-O-CH (CH₃) -CH₂-) _{b} (-O-CH₂-CH (CH₃)-)_{c} oder Kombination miteinander,
wobei a, b und c voneinander unabhängig sind und
a gleich 1-50, bevorzugt 2-30, besonders bevorzugt 3-20, ganz besonders bevorzugt 4-15, außerordentlich bevorzugt 5-12,
b gleich 1-50, bevorzugt 2-30, besonders bevorzugt 3-20, ganz besonders bevorzugt 4-15, außerordentlich bevorzugt 5-12 und
c gleich 1-50, bevorzugt 2-30, besonders bevorzugt 3-20, ganz besonders bevorzugt 4-15, außerordentlich bevorzugt 5-12 ist.

Die Indexe a, b und c sind ganze Zahlen und bezeichnen die Anzahl der Wiederholeinheiten.

Die Gruppe (R⁵-O)ₘ kann für R⁴ gleich -H bevorzugt Ethylenoxid- (CH₂-CH₂-O)ₐ oder Propylenoxid-(CH(CH₃)-CH₂-O)ₐ bzw. (CH₂-CH(CH₃)-O)ₐ -Einheiten enthalten.

Die Gruppe (R⁵-O)ₘ kann für R⁴ gleich -H bevorzugt Ethylenoxid- (CH₂-CH₂-O)ₐ und Propylenoxid-(CH(CH₃)-CH₂-O)ₐ bzw. (CH₂-CH(CH₃)-O)ₐ -Einheiten statistisch verteilt oder in Blöcken enthalten.

Die Alkylpolyethergruppe Gruppe (R⁵-O)ₘ kann für R⁴ gleich - H bevorzugt Ethylenoxid- (CH₂-CH₂-O)ₐ und Propylenoxid-(CH(CH₃)-CH₂-O)ₐ bzw. (CH₂-CH(CH₃)-O)ₐ -Einheiten statistisch verteilt oder in Blöcken enthalten.

Die Gruppe (R⁵-O)ₘ kann für R⁴ gleich -H bevorzugt Propylenoxid- (CH(CH₃)-CH₂-O)ₐ bzw. (CH₂-CH(CH₃)-O)ₐ-Einheiten enthalten.

Die Alkylpolyethergruppe O-(R⁵-O)ₘ-R⁶ kann für R⁴ gleich -H sein:
O- (CH₂-CH₂O) ₂-C₁₁H₂₃, O- (CH₂-CH₂O) ₃-C₁₁H₂₃, O- (CH₂-CH₂O) ₄-C₁₁H₂₃,
0- (CH₂-CH₂O) ₅-C₁₁H₂₃, O- (CH₂-CH₂O) ₆-C₁₁H₂₃, O- (CH₂-CH₂O) ₇-C₁₁H₂₃,

O-(CH(CH₃)-CH₂O)₂-C₁₁H₂₃, O-(CH(CH₃)-CH₂O)₃-C₁₁H₂₃, O-(CH(CH₃)-CH₂O)₄-C₁₁H₂₃, O-(CH(CH₃)-CH₂O)₅-C₁₁H₂₃, O-(CH(CH₃)-CH₂O)₆-C₁₁H₂₃, O- (CH (CH₃) -CH₂O)₇-C₁₁H₂₃,

O- (CH₂-CH₂O) ₂-C₁₂H₂₅, O- (CH₂-CH₂O) ₃-C₁₂H₂₅, O- (CH₂-CH₂O) ₄-C₁₂H₂₅,
O- (CH₂-CH₂O) ₅-C₁₂H₂₅, O- (CH₂-CH₂O) ₆-C₁₂H₂₅, O- (CH₂-CH₂O) ₇-C₁₂H₂₅,

O- (CH (CH₃) -CH₂O) ₂-C₁₂H₂₅, O- (CH (CH₃) -CH₂O) ₃-C₁₂H₂₅, O- (CH (CH₃) -
CH₂O) ₄-C₁₂H₂₅ , O- (CH (CH₃) -CH₂O) ₅-C₁₂H₂₅, O- (CH (CH₃) -CH₂O) ₆-O- (CH (CH₃) -CH₂O) ₇-C₁₂H₂₅,
O- (CH₂-CH₂O) ₂-C₁₃H₂₇, O-(CH₂-CH₂O) ₃-C₁₃H₂₇, O- (CH₂-CH₂O) ₄-C₁₃H₂₇,
O- (CH₂-CH₂O) ₅-C₁₃H₂₇, O- (CH₂-CH₂O) ₆-C₁₃H₂₇, O- (CH₂-CH₂O) ₇-C₁₃H₂₇,

O- (CH (CH₃) -CH₂O) ₂-C₁₃H₂₇, O- (CH (CH₃) -CH₂O) ₃-C₁₃H₂₇, O- (CH (CH₃) - CH₂O) ₄-C₁₃H₂₇, O- (CH (CH₃) -CH₂O) ₅-C₁₃H₂₇, O- (CH (CH₃) -CH₂O) ₆-C₁₃H₂₇, O- (CH (CH₃) -CH₂O) ₇-C₁₃H₂₇,
O- (CH₂-CH₂O) ₂-C₁₄H₂₉, O- (CH₂-CH₂O) ₃-C₁₄H₂₉, O- (CH₂-CH₂O) ₄-C₁₄H₂₉,
O- (CH₂-CH₂O) ₅-C₁₄H₂₉, O- (CH₂-CH₂O) ₆-C₁₄H₂₉, O- (CH₂-CH₂O) ₇-C₁₄H₂₉,

O-(CH (CH₃)-CH₂O) ₂-C₁₄H₂₉, O-(CH (CH₃)-CH₂O) ₃-C₁₄H₂₉, O-(CH (CH₃)-CH₂O)₄-C₁₄H₂₉, O- (CH (CH₃)-CH₂O) ₅-C₁₄H₂₉, O- (CH (CH₃)-CH₂O) ₆-C₁₄H₂₉, O- (CH (CH₃) -CH₂O) ₇-C₁₄H₂₉,
O- (CH₂-CH₂O) ₂-C₁₅H₃₁, O- (CH₂-CH₂O) ₃-C₁₅H₃₁, O- (CH₂-CH₂O) ₄-C₁₅H₃₁,
O- (CH₂-CH₂O) ₅-C₁₅H₃₁, O- (CH₂-CH₂O) ₆-C₁₅H₃₁, O- (CH₂-CH₂O) ₇-C₁₅H₃₁,

O- (CH (CH₃) -CH₂O) ₂-C₁₅H₃₁, O- (CH (CH₃) -CH₂O) ₃-C₁₅H₃₁, O- (CH (CH₃)-CH₂O) ₄-C₁₅H₃₁, O- (CH (CH₃) -CH₂O) ₅-C₁₅H₃₁, O- (CH (CH₃) -CH₂O) ₆-C₁₅H₃₁, O- (CH (CH₃) -CH₂O) ₇-C₁₅H₃₁,

O- (CH₂-CH₂O) ₂-C₁₆H₃₃, O- (CH₂-CH₂O) ₃-C₁₆H₃₃, O- (CH₂-CH₂O) ₄-C₁₆H₃₃,
O- (CH₂-CH₂O) ₅-C₁₆H₃₃, O- (CH₂-CH₂O) ₆-C₁₆H₃₃, O- (CH₂-CH₂O) ₇-C₁₆H₃₃,

O-(CH (CH₃)-CH₂O) ₂-C₁₆H₃₃, O-(CH (CH₃)-CH₂O) ₃-C₁₆H₃₃, O-(CH(CH₃)-CH₂O) ₄-C₁₆H₃₃, O- (CH (CH₃) -CH₂O) ₅-C₁₆H₃₃, O (CH (CH₃) -CH₂O) ₆-C₁₆H₃₃, O- (CH (CH₃) -CH₂O) ₇-C₁₆H₃₃,

O- (CH₂-CH₂O) ₂-C₁₇H₃₅, O (CH₂-CH₂O) ₃-C₁₇H₃₅, O (CH₂-CH₂O) ₄-C₁₇H₃₅,
O (CH₂-CH₂O) ₅-C₁₇H₃₅, O (CH₂-CH₂O) ₆-C₁₇H₃₅, O (CH₂-CH₂O) ₇-C₁₇H₃₅,

O-(CH (CH₃)-CH₂O) ₂-C₁₇H₃₅, O-(CH (CH₃)-CH₂O) ₃-C₁₇H₃₅, O-(CH(CH₃)-CH₂O) ₄-C₁₇H₃₅, O- (CH (CH₃) -CH₂O) ₅-C₁₇H₃₅, O- (CH (CH₃) -CH₂O) ₆-C₁₇H₃₅ oder O- (CH (CH₃) -CH₂O) ₇-C₁₇H₃₅.

Die Gruppe R⁵ kann substituiert sein. Die Gruppe R⁶ kann C₁₃H₂₇ sein.

R¹ kann -O- (C₂H₄-O)₅-C₁₁H₂₃,-O-(C₂H₄O)₅-C₁₂H₂₅, -O-(C₂H₄-O)₅-C₁₃H₂₇, -O- (C₂H₄-O)₅-C₁₄H₂₉, -O-(C₂H₄-O)₅-C₁₅H₃₁, -O-(C₂H₄-O)₃-C₁₃H₂₇, -O- (C₂H₄-O)₄-C₁₃H₂₇, -O- (C₂H₄-O)₆-C₁₃H₂₇, -O-(C₂H₄-O)₇-C₁₃H₂₇, -O- (CH₂CH₂-O)₅-(CH₂)₁₀CH₃, -O- (CH₂CH₂-O)₅-(CH₂)₁₁H₃, -O-(CH₂CH₂-O)₅-(CH₂)₁₂CH₃, -O-(CH₂CH₂-O)₅-(CH₂)₁₃CH₃, -O-(CH₂CH₂-O) 5-(CH₂)₁₄CH₃, -O- (CH₂CH₂-O)₃- (CH₂)₁₂CH₃, -O- (CH₂CH₂-O)₄-(CH₂)₁₂CH₃, -O- (CH₂CH₂-O)₆-(CH₂)₁₂CH₃, -O- (CH₂CH₂-O)₇-(CH₂)₁₂CH₃, 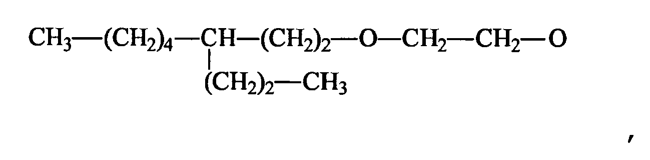 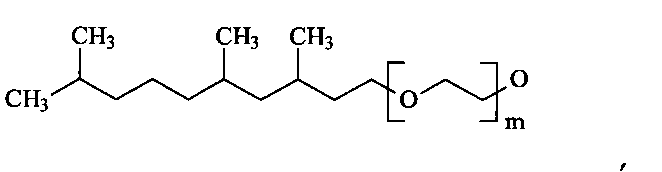 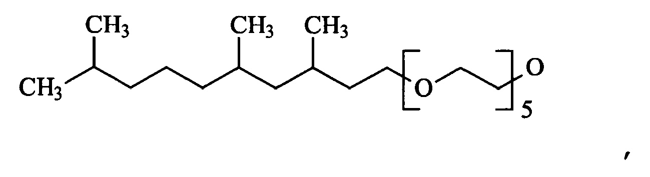 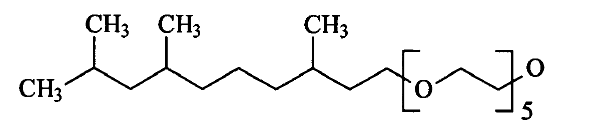 oder 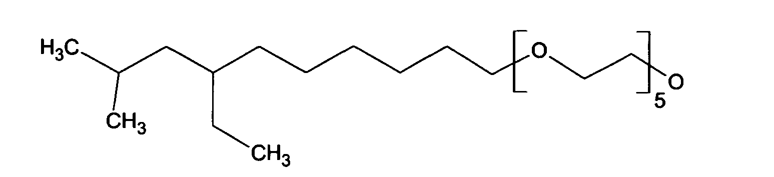 sein.

Die mittlere Verzweigungszahl der Kohlenstoffkette R⁶ kann 1 bis 5, vorzugsweise 1,2 bis 4, sein. Die mittlere Verzweigungszahl ist dabei definiert als die Anzahl der CH₃-Gruppen-1.

R³ kann CH₂, CH₂CH₂, CH₂CH₂CH₂, CH₂CH₂CH₂CH₂, CH(CH₃), CH₂CH(CH₃), CH(CH₃)CH₂, C(CH₃)₂, CH(C₂H₅), CH₂CH₂CH(CH₃), CH₂CH(CH₃)CH₂ oder 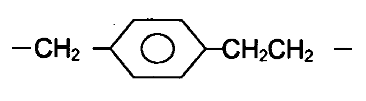 bedeuten.

Das Mercaptosilan der allgemeinen Formel I kann ein Gemisch aus Mercaptosilanen der allgemeinen Formel I sein, bei dem R¹ und R² ein Gemisch aus Alkoxy und Alkylpolyethergruppen sind.

Das Mercaptosilan der allgemeinen Formel I kann ein Gemisch aus Mercaptosilanen der allgemeinen Formel I, mit R² gleich oder verschieden und eine Alkoxy- oder Alkylpolyethergruppe (R¹) ist, sein, wobei R² in dem Gemisch unterschiedlich ist.

Das Mercaptosilan der allgemeinen Formel I kann ein Gemisch aus Mercaptosilanen der allgemeinen Formel I sein, bei dem R¹ und R² ein Gemisch aus Ethoxy und Alkylpolyethergruppen sind und die Alkylpolyethergruppen aus einem R⁶ mit einer Alkylkettenlänge von 13 C-Atomen, R⁵ Ethylen und m im Mittel 5 ist.

Das Mercaptosilan der allgemeinen Formel I kann ein Gemisch aus Mercaptosilanen der allgemeinen Formel I, mit R² gleich oder verschieden und eine Ethoxy- oder Alkylpolyethergruppe (R¹) ist, wobei die Alkylpolyethergruppe -O-(R⁵-O)ₘ-R⁶ aus einem R⁶ mit einer Alkylkettenlänge von 13 C-Atomen, einem R⁵ gleich Ethylen und m im Mittel 5 besteht, sein, wobei R² in dem Gemisch unterschiedlich ist.

Das Mercaptosilan der allgemeinen Formel I kann ein Gemisch aus Mercaptosilanen der allgemeinen Formel I sein, bei dem R¹ und R² ein Gemisch aus Alkoxy und Alkylpolyethergruppen sind und R⁶ aus unterschiedlichen C-Atomkettenlängen besteht und eine Molekulargewichtsverteilung aufweist.

Das Mercaptosilan der allgemeinen Formel I kann ein Gemisch aus Mercaptosilanen der allgemeinen Formel I, mit R² gleich oder verschieden und eine Alkoxy- oder Alkylpolyethergruppe (R¹) ist, sein, wobei R² in dem Gemisch unterschiedlich ist, R⁶ aus unterschiedlichen C-Atomkettenlängen besteht und eine Molekulargewichtsverteilung aufweist.

Das Mercaptosilan der allgemeinen Formel I kann bevorzugt ein Gemisch von Mercaptosilanen der allgemeinen Formel I sein und 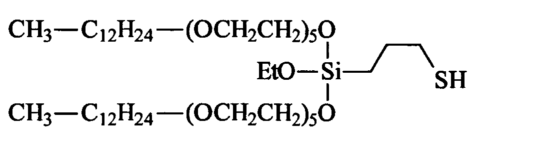 und/oder 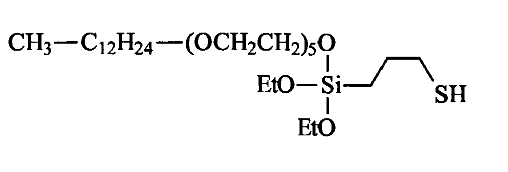 und Hydrolyse- und/oder Kondensationsprodukte der vorgenannten Verbindungen enthalten.

Aus den erfindungsgemäßen Silanen der Formel I können durch Wasserzugabe und ggf. Additivzugabe leicht Kondensationsprodukte, das heisst Oligo- und Polysiloxane gebildet werden.

Diese oligomeren oder polymeren Siloxane der Verbindungen der Formel I können als Kopplungsreagenzien für dieselben Anwendungen wie die monomeren Verbindungen der Formel I verwendet werden.

Die erfindungsgemäßen Mercaptosilanverbindungen können auch als Mischung der oligomeren oder polymeren Siloxane von Mercaptosilanen der allgemeinen Formel I oder als Mischungen von Mercaptosilanen der allgemeinen Formel I mit Mischungen der oligomeren oder polymeren Siloxane von Mercaptosilanen der allgemeinen Formel I vorliegen.

Ein weiterer Gegenstand der Erfindung ist ein Verfahren zur Herstellung der erfindungsgemäßen Mercaptosilane, welches dadurch gekennzeichnet ist, daß man Silane der allgemeinen Formel II 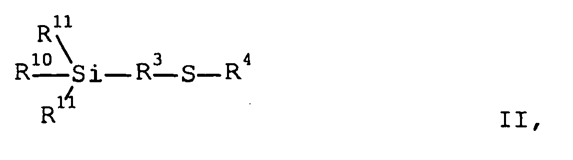 wobei R¹⁰ eine R⁷O-Gruppe ist und R⁷ die oben angegebene Bedeutung hat,
R¹¹ gleich oder verschieden und eine R¹⁰- oder C1-C12-AlkylGruppe ist,
R³ und R⁴ die oben angegebene Bedeutung haben,
mit einem alkoxylierten Alkohol R¹-H, wobei R¹ die oben angegebene Bedeutung hat, unter Abspaltung von R⁷-OH katalysiert umgesetzt und R⁷-OH von dem Reaktionsgemisch kontinuierlich oder diskontinuierlich abtrennt.

Der alkoxylierte Alkohol R¹-H kann ein ethoxylierter Alkohol sein.

Das molare Verhältnis des alkoxylierten Alkohols R¹-H zu dem Silan der allgemeinen Formel II kann mindestens 0,5, vorzugsweise mindestens 1,0, sein.

Aus den erfindungsgemäßen Silanen der Formel I können durch Wasserzugabe und ggf. Additivzugabe leicht Kondensationsprodukte, das heisst Oligo- und Polysiloxane gebildet werden. Die Oligo- und Polysiloxane können aber auch durch Oligomerisierung oder Cooligomerisierung der entsprechenden Alkoxysilanverbindungen der allgemeinen Formel II durch Wasserzugabe und dem Fachmann auf diesem Gebiet bekannte Additivzugabe und Verfahrensweise erhalten werden.

Die erfindungsgemäßen Mercaptosilane können mittels hochauflösender 1-H, 29-Si, 13-C NMR oder GPC untersucht werden und auch die Zusammensetzung der entstandenen Substanzgemische bezüglich der relativen Verteilung der Alkoxysubstituenten zueinander ermittelt werden.

Das entstehende Gemisch von homologen Alkoxysilanverbindungen kann als solches oder auch aufgetrennt in einzelne Verbindungen oder isolierte Fraktionen verwendet werden.

Die für die Umesterung verwendeten alkoxylierten Alkohole R¹-H können sowohl als Gemische verschiedener Alkohole wie auch als reine Substanzen eingesetzt werden. Als alkoxylierter Alkohole R¹-H können beispielsweise verzweigte oder lineare Alkohole eingesetzt werden, die ethoxyliert/propoxyliert sind bzw. Ethylenoxid- und Propylenoxid-Einheiten enthalten.

Die für die Umesterung als Katalysatoren verwendeten Verbindungen können metallhaltig oder metallfrei sein.

Als metallfreie Verbindungen können organische Säuren, wie beispielsweise Trifluoressigsäure, Trifluormethansulfonsäure oder p-Toluolsulfonsäure, Trialkylammoniumverbindungen E₃NH⁺Z⁻ oder Basen, wie beispielsweise Trialkylamine NE₃, mit E=Alkyl und Z⁻Gegenion, eingesetzt werden.

Die für die Umesterung als Katalysatoren eingesetzten Metallverbindungen können Übergangsmetallverbindungen sein.

Als Metallverbindungen für die Katalysatoren können Metallchloride, Metalloxide, Metalloxychloride, Metallsulfide, Metallsulfochloride, Metallalkoholate, Metallthiolate, Metalloxyalkoholate, Metallamide, Metallimide oder Übergangsmetallverbindungen mit multiplen gebundenen Liganden eingesetzt werden.

Beispielsweise können als Metallverbindungen Halogenide, Amide oder Alkoholate der 3. Hauptgruppe (M³⁺= B, Al, Ga, In, Tl : M³⁺(OMe)₃, M³⁺(OEt)₃, M³⁺(OC₃H₇)₃, M³⁺(OC₄H₉)₃), Halogenide, Oxide, Sulfide, Imide, Alkoholate, Amide, Thiolate und Kombinationen der genannten Substituentenklassen mit multiple gebundenen Liganden an Verbindungen der Lanthaniden-Gruppe (Seltenen Erden, Ordnungszahl 58 bis 71 im Periodensystem der Elemente), Halogenide, Oxide, Sulfide, Imide, Alkoholate, Amide, Thiolate und Kombinationen der genannten Substituentenklassen mit multiple gebundenen Liganden an Verbindungen der 3. Nebengruppe (M³⁺= Sc, Y, La : M³⁺(OMe)₃, M³⁺(OEt)₃, M³⁺(OC₃H₇)₃, M³⁺(OC₄H₉)₃, cpM³⁺ (Cl)₂, cp cpM³⁺ (OMe) ₂, cpM³⁺(OEt)₂, cpM³⁺(NMe₂)₂ mit cp = Cyclopentadienyl), Halogenide, Sulfide, Amide, Thiolate oder Alkoholate der 4.

Hauptgruppe (M⁴⁺=Si Ge, Sn, Pb: M⁴⁺ (OMe) ₄, M⁴⁺ (OEt) ₄, M⁴⁺ (OC₃H₇) ₄, M⁴⁺(OC₄H₉)₄ ; M²⁺=Sn, Pb: M²⁺(OMe)₂, M²⁺ (OEt) ₂, M²⁺ (OC₃H₇) ₂, M²⁺ (OC₄H₉)₂), Zinndilaurat, Zinndiacetat, Sn (OBu)₂ Halogenide, Oxide, Sulfide, Imide, Alkoholate, Amide, Thiolate und Kombinationen der genannten Substituentenklassen mit multiple gebundenen Liganden an Verbindungen der 4. Nebengruppe (M⁴⁺=Ti, Zr, Hf: (M⁴⁺(F)₄, M⁴⁺(Cl)₄, M⁴⁺(Br)₄, M⁴⁺(I)₄; M⁴⁺(OMe)₄, M⁴⁺(OEt)₄, M⁴⁺(OC₃H₇)₄, M⁴⁺(OC₄H₉)₄, cp₂Ti(Cl)₂, cp₂Zr(Cl)₂, cp₂Hf (Cl)₂, cp₂Ti (OMe)₂, cp₂Zr(OMe)₂, cp₂Hf(OMe)₂, cpTi(Cl)₃, cpZr(Cl)₃, cpHf(Cl)₃; cpTi (OMe)₃, cpZr (OMe)₃, cpHf (OMe)₃, M⁴⁺(NMe₂)₄, M⁴⁺(NEt₂)₄, M⁴⁺ (NHC₄H₉)₄),
Halogenide, Oxide, Sulfide, Imide, Alkoholate, Amide, Thiolate und Kombinationen der genannten Substituentenklassen mit multiple gebundenen Liganden an Verbindungen der 5. Nebengruppe (M⁵⁺, M⁴⁺ oder M³⁺= V, Nb, Ta : M⁵⁺(OMe)₅, M⁵⁺(OEt)₅, M⁵⁺ (OC₃H₇) ₅, M⁵⁺(OC₄H₉)₅, M³⁺O (OMe)₃,
M³⁺O (OEt)₃, M³⁺O (OC₃H₇) ₃, M³⁺O (OC₄H₉)₃, cpV (OMe)₄, cpNb (OMe) ₃ ,cpTa(OMe)₃; cpV(OMe)₂, cpNb (OMe)₃ , cpTa (OMe)₃),
Halogenide, Oxide, Sulfide, Imide, Alkoholate, Amide, Thiolate und Kombinationen der genannten Substituentenklassen mit multiple gebundenen Liganden an Verbindungen der 6. Nebengruppe (M⁶⁺, M⁵⁺ oder M⁴⁺=Cr, Mo, W: M⁶⁺(OMe)₆, M⁶⁺(OEt)₆, M⁶⁺(OC₃H₇)₆, M⁶⁺(OC₄H₉)₆, M⁶⁺O (OMe)₄, M⁶⁺O (OEt)₄, M⁶⁺O (OC₃H₇)₄, M⁶⁺O (OC₄H₉)₄, M⁶⁺O₂(OMe)₂, M⁶⁺O₂(OEt)₂, M⁶⁺O₂(OC₃H₇)₂, M⁶⁺O₂(OC₄H₉)₂, M⁶⁺O₂(OSiMe₃)₂) oder
Halogenide, Oxide, Sulfide, Imide, Alkoholate, Amide, Thiolate und Kombinationen der genannten Substituentenklassen mit multiple gebundenen Liganden an Verbindungen der 7. Nebengruppe (M⁷⁺, M⁶⁺, M⁵⁺ oder M⁴⁺=Mn, Re: M⁷⁺O (OMe)₅, M⁷⁺O (OEt)₅, M⁷⁺O (OC₃H₇)₅, M⁷⁺O (OC₄H₉)₅, M⁷⁺O₂(OMe)₃, M⁷⁺O₂(OEt)₃, M⁷⁺O₂(OC₃H₇)₃, M⁷⁺O₂(OC₄H₉)₃, M⁷⁺O₂(OSiMe₃)₃, M⁷⁺O₃(OSiMe₃), M⁷⁺O₃(CH₃)) verwendet werden.

Die Metall- und Übergangsmetallverbindungen können eine freie Koordinationsstelle am Metall besitzen.

Als Katalysatoren können auch Metall- oder Übergangsmetallverbindungen verwendet werden, die durch Wasserzugabe zu hydrolisierbaren Metall- oder Übergangsmetallverbindungen gebildet werden.

In einer besonderen Ausführungsform kann man Titanate, wie beispielsweise Tetra-n-butyl-orthotitanat oder Tetra-isopropyl-orthotitanat, als Katalysatoren verwenden.

Die Reaktion kann man bei Temperaturen zwischen 20 und 200 °C, vorzugsweise zwischen 50 und 170°C, besonders bevorzugt zwischen 80 und 150°C, durchführen. Zur Vermeidung von Kondensationsreaktionen kann es vorteilhaft sein, die Reaktion in einer wasserfreien Umgebung, idealerweise in einer Inertgasatmosphäre, durchzuführen.

Die Reaktion kann man bei Normaldruck oder reduziertem Druck durchführen. Die Reaktion kann man kontinuierlich oder diskontinuierlich durchführen.

Die erfindungsgemäßen Organosiliciumverbindungen können als Haftvermittler zwischen anorganischen Materialien, zum Beispiel Glasfasern, Metallen, oxidischen Füllstoffen, Kieselsäuren, und organischen Polymeren, zum Beispiel Duroplasten, Thermoplasten oder Elastomeren beziehungsweise als Vernetzungsmittel und Oberflächenmodifizierungsmittel verwendet werden. Die erfindungsgemäßen Organosiliciumverbindungen können als Kopplungsreagenzien in gefüllten Kautschukmischungen, beispielsweise Reifenlaufflächen, verwendet werden.

Ein weiterer Gegenstand der Erfindung sind Kautschukmischungen, enthaltend
(A) einen Kautschuk oder eine Mischung von Kautschuken,
(B) einen Füllstoff und
(C) mindestens ein Mercaptosilan der allgemeinen Formel I.

Als Kautschuk können Naturkautschuk und/oder Synthesekautschuke verwendet werden. Bevorzugte Synthesekautschuke sind beispielsweise bei W. Hofmann, Kautschuktechnologie, Genter Verlag, Stuttgart 1980, beschrieben. Sie können unter anderem
- Polybutadien (BR),
- Polyisopren (IR),
- Styrol/Butadien-Copolymerisate, beispielsweise Emulsions-SBR (E-SBR) oder Lösungs-SBR (L-SBR), vorzugsweise mit Styrolgehalten von 1 bis 60 Gew.-%, besonders vorzugsweise 5 bis 50 Gew.-% (SBR),
- Chloropren (CR)
- Isobutylen/Isopren-Copolymerisate (IIR),
- Butadien/Acrylnitril-Copolymere mit Acrylnitrilgehalten von 5 bis 60, vorzugsweise 10 bis 50 Gew.-% (NBR),
- teilhydrierter oder vollständig hydrierter NBR-Kautschuk (HNBR)
- Ethylen/Propylen/Dien-Copolymerisate (EPDM)
- oben genannte Kautschuke, die zusätzlich funktionelle Gruppen besitzen, wie z.B. Carboxy- , Silanol- oder Epoxygruppen, beispielsweise Epoxidierter NR, Carboxyfunktionalisierter NBR oder Silanol- (-SiOH) bzw. Siloxy-funktionalisierter (-Si-OR) SBR,
sowie Mischungen dieser Kautschuke sein.

In einer bevorzugten Ausführungsform können die Kautschuke schwefelvulkanisierbar sein. Für die Herstellung von PKW-Reifenlaufflächen können insbesondere anionisch polymerisierte L-SBR-Kautschuke (Lösungs-SBR) mit einer Glastemperatur oberhalb von -50 °C sowie deren Mischungen mit Dienkautschuken eingesetzt werden. Besonders bevorzugt können L-SBR-Kautschuke, deren Butadienteil einen Vinylanteil von über 20 Gew.-% aufweisen, eingesetzt werden. Ganz besonders bevorzugt können L-SBR-Kautschuke, deren Butadienteil einen Vinylanteil von über 50 Gew.-% aufweisen, eingesetzt werden.

Bevorzugt können Mischungen der oben genannten Kautschuke, die einen L-SBR-Anteil von über 50 Gew.-%, besonders bevorzugt über 60 Gew.-%, aufweisen, eingesetzt werden.

Als Füllstoffe können für die erfindungsgemäßen Kautschukmischungen die folgenden Füllstoffe eingesetzt werden:
- Ruße: Die hierbei zu verwendenden Ruße sind nach dem Flammruß-, Furnace-, Gasruß oder Thermal-Verfahren hergestellt und besitzen BET-Oberflächen von 20 bis 200 m²/g. Die Ruße können gegebenenfalls auch Heteroatome wie zum Beispiel Si enthalten.
- Amorphe Kieselsäuren, hergestellt zum Beispiel durch Fällung von Lösungen von Silikaten oder Flammenhydrolyse von Siliciumhalogeniden mit spezifischen Oberflächen von 5 bis 1000 m²/g, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden vorliegen.
- Synthetische Silikate, wie Aluminiumsilikat, Erdalkalisilikate, wie Magnesiumsilikat oder Calciumsilikat, mit BET-Oberflächen von 20 bis 400 m²/g und Primärteilchendurchmessern von 10 bis 400 nm.
- Synthetische oder natürliche Aluminium-oxide und - hydroxide
- Natürliche Silikate, wie Kaolin und andere natürlich vorkommende Kieselsäuren.
- Glasfaser und Glasfaserprodukte (Matten, Stränge) oder Mikroglaskugeln.

Bevorzugt können amorphe Kieselsäuren, hergestellt durch Fällung von Lösungen von Silikaten, mit BET-Oberflächen von 20 bis 400 m²/g, besonders bevorzugt 100 m²/g bis 250 m²/g, in Mengen von 5 bis 150 Gew.-Teilen, jeweils bezogen auf 100 Teile Kautschuk, eingesetzt werden.

Die genannten Füllstoffe können alleine oder im Gemisch eingesetzt werden.

Die Kautschukmischungen können 5 bis 150 Gew.-Teile Füllstoff (B) und 0,1 bis 25 Gew.-Teile, bevorzugt 2 bis 20 Gew.-Teile, besonders bevorzugt 5 bis 15 Gew.-Teile, Mercaptosilan der Formel I (C), enthalten, wobei die Gew.-Teile auf 100 Gew.-Teile Kautschuk bezogen sind.

Das Mercaptosilan der Formel I kann sowohl in reiner Form als auch aufgezogen auf einen inerten organischen oder anorganischen Träger sowie vorreagiert mit einem organischen oder anorganischen Träger dem Mischprozeß zugegeben werden. Bevorzugte Trägermaterialien sind gefällte oder pyrogene Kieselsäuren, Wachse, Thermoplaste, natürliche oder synthetische Silikate, natürliche oder synthetische Oxide, speziell Aluminiumoxid oder Ruße. Desweiteren kann das Mercaptosilan der Formel I auch vorreagiert mit dem einzusetzenden Füllstoff dem Mischprozeß zugegeben werden.

Die Kautschukmischungen können zusätzlich Silikonöl und/oder Alkylsilan enthalten.

Die erfindungsgemäßen Kautschukmischungen können weitere bekannte Kautschukhilfsmittel, wie zum Beispiel Vernetzer, Vulkisationsbeschleuniger, Reaktionsbeschleuniger, - verzögerer, Alterungsschutzmittel, Stabilisatoren, Verarbeitungshilfsmittel, Weichmacher, Wachse oder Metalloxide enthalten, sowie ggf. Aktivatoren, wie Triethanolamin, Polyethylenglykol oder Hexantriol.

Die Kautschukhilfsmittel können in üblichen Mengen, die sich unter anderem nach dem Verwendungszweck richten, eingesetzt werden. Übliche Mengen können zum Beispiel Mengen von 0,1 bis 50 Gew.-%, bezogen auf Kautschuk, sein.

Als Vernetzer können Schwefel oder organische Schwefelspender eingesetzt werden.

Die erfindungsgemäßen Kautschukmischungen können weitere Vulkanisationsbeschleuniger enthalten. Beispielsweise können als geeignete Vulkanisationsbeschleuniger Mercaptobenzthiazole, Sulfenamide, Guanidine, Dithiocarbamate, Thioharnstoffe, Thiocarbonate sowie deren Zinksalze, wie z.B. Zinkdibutyldithiocarbamat, eingesetzt werden.

Die erfindungsgemäßen Kautschukmischungen können bevorzugt zusätzlich
(D) ein Thiuramsulfid- und/oder Carbamatbeschleuniger und/oder die entsprechenden Zinksalze,
(E) ein stickstoffhaltigen Co-Aktivator,
(F) gegebenenfalls weitere Kautschukhilfsmittel und
(G) gegebenenfalls weitere Beschleuniger
enthalten, wobei das Gewichtsverhältnis Beschleuniger (D) zu stickstoffhaltigem Co-Aktivator (E) gleich oder größer 1 ist.

Die erfindungsgemäßen Kautschukmischungen können (D) Tetrabenzylthiuramdisulfid oder Tetramethylthiuramdisulfid mit mindestens 0,25 Gewichtsteilen, bezogen auf 100 Gewichtsteile Kautschuk, (E) Diphenylguanidin mit maximal 0,25 Gewichtsteile, bezogen auf 100 Gewichtsteile Kautschuk, und (G) Cyclohexyl- oder Dicyclohexylsulfenamid mit mehr Gewichtsteilen als (D) enthalten.

Bevorzugt können Sulfenamide zusammen mit Guanidinen und Thiuramen, besonders bevorzugt Cyclohexylsulfenamid oder Dicylohexylsulfenamid zusammen mit Diphenylguanidin und Tetrabenzylthiuramdisulfid oder Tetramethylthiuramdisulfid, eingesetzt werden.

Die Vulkanisationsbeschleuniger und Schwefel können in Mengen von 0,1 bis 10 Gew.-%, bevorzugt 0,1 bis 5 Gew.-%, bezogen auf den eingesetzten Kautschuk, eingesetzt werden. Besonders bevorzugt können Schwefel und Sulfenamide in Mengen von 1 bis 4 Gew.-%, Thiurame in Mengen von 0,2 bis 1 Gew.-% und Guanidine in Mengen von 0 Gew.-% bis 0,5 Gew.-% eingesetzt werden.

Ein weiterer Gegenstand der Erfindung ist ein Verfahren zur Herstellung der erfindungsgemäßen Kautschukmischungen, welches dadurch gekennzeichnet ist, daß man den Kautschuk oder die Mischung von Kautschuken (A), den Füllstoff (B), mindestens ein erfindungsgemäßes Mercaptosilan der allgemeinen Formel I (C) und gegebenenfalls weitere Kautschukhilfsmittel in einem Mischaggregat mischt.

Die Abmischung der Kautschuke mit dem Füllstoff, gegebenenfalls Kautschukhilfsmitteln und der erfindungsgemäßen Mercaptosilane kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, der Füllstoff, die erfindungsgemäßen Mercaptosilane und die Kautschukhilfsmittel bei 100 bis 170°C eingemischt werden. Dabei kann sich die Zugabereihenfolge und der Zugabezeitpunkt der Einzelkomponenten entscheidend auf die erhaltenen Mischungseigenschaften auswirken. Üblicherweise kann die so erhaltene Kautschukmischung in einem Innenmischer oder auf einer Walze bei 40 bis 110 °C mit den Vernetzungschemikalien versetzt werden und zur sogenannten Rohmischung für die nachfolgenden Prozeßschritte, wie zum Beispiel Formgebung und Vulkanisation, verarbeitet werden.

Die Vulkanisation der erfindungsgemäßen Kautschukmischungen kann bei Temperaturen von 80 bis 200 °C, bevorzugt 130 bis 180°C, gegebenenfalls unter Druck von 10 bis 200 bar erfolgen.

Die erfindungsgemäßen Kautschukmischungen können zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungselementen, wie zum Beispiel Dichtungsringe und Dämpfungselemente, verwendet werden.

Ein weiterer Gegenstand der Erfindung sind Formkörper, erhältlich aus der erfindungsgemäßen Kautschukmischung durch Vulkanisation.

Die erfindungsgemäßen Mercaptosilane haben den Vorteil, daß auch bei kurzen, kommerziell vertretbaren Mischzeiten in Kautschuk die Verstärkung groß, der Hystereseverlust niedrig und der Abriebwiderstand hoch ist und gleichzeitig gegenüber trimethoxy- und triethoxysubstituierten Mercaptosilanen die Alkoholemission reduziert ist.

### Beispiele:

### Beispiel 1:

In einem 500 ml-Vierhalskolben mit Destillationsbrücke, KPG-Rührer und Thermometer werden bei Raumtemperatur unter Stickstoff 59,63 g (0,25 mol) 3-Mercaptopropyltriethoxysilan (VP Si 263 der Firma Degussa AG), 212,92 g (0,50 mol) eines ethoxylierten Alkohols R¹H, mit R⁵ gleich CH₂-CH₂, R⁶ gleich einer aus 13 C-Atomen bestehenden, unsubstitutierten, einbindigen Alkylgruppe und m im Mittel 5 (Lutensol TO 5 der Firma BASF AG) sowie 30 µl Titantetrabutylat eingewogen. Die Mischung wird auf 140 °C erhitzt. Das entstehende Ethanol wird kontinuierlich abdestilliert. Nach 35 min wird der Unterdruck auf 640 mbar eingestellt und innerhalb von 3 h auf 50 mbar reduziert. Nach 3 h und 35 min wird die Reaktion beendet. Man erhält 245,37 g (98,6 %) eines trüben und leicht gelben Produkts. Aus der ¹H-NMR-Spektroskopie wird ein mittlerer Umesterungsgrad von 2,0 erhalten. Aus dem 13C-NMR kann die Verteilung der langkettigen verzweigten Alkylpolyether am Si ermittelt werden.

### Beispiel 2 (Vergleichsbeispiel)

In einem 41-Vierhalskolben mit Destillationsbrücke, KPG-Rührer und Thermometer werden bei Raumtemperatur unter Stickstoff 2925,3 g 3-Mercaptopropyltriethoxysilan, 4753,4 g eines Alkoholgemisches bestehend aus 72 % Dodecanol und 28 % Tetradecanol sowie 30 µl Titantetrabutylat eingewogen. Die Mischung wird auf 110 °C erhitzt. Das entstehende Ethanol wird kontinuierlich abdestilliert. Nach 2 h wird der Unterdruck innerhalb von 3 h kontinuierlich auf 50 mbar mbar reduziert. Die Reaktion wird beendet, wenn 1140 ml Ethanol aus der Reaktionsmischung entfernt sind. Man erhält 6,47 kg (98,6 %) einer leicht gelben Flüssigkeit. Aus der ¹H-NMR-Spektroskopie wird ein mittlerer Umesterungsgrad von 2,0 erhalten.

### Beispiel 3 (Vergleichsbeispiel)

In einem 500 ml-Dreihalskolben mit Intensivkühler, Rührer und Thermometer werden bei Raumtemperatur unter Stickstoff 150,02 g (0,63 mol) 3-Mercaptopropyltriethoxysilan, 151,2 g (1,26 mol) Diethylenglykolmonomethylether sowie 75 µl Titantetrabutylat eingewogen. Die Mischung wird auf 80 °C erhitzt. Anschließend wird das entstehende Ethanol bei einem Unterdruck von 3 mbar entfernt.

Nach 8 h wird die Reaktion beendet. Es werden 237,84 g (97,6 %)eines klaren und leicht gelben Produkts erhalten. Aus der ¹H-NMR-Spektroskopie wird ein mittlerer Umesterungsgrad von 2,0 erhalten.

### Beispiel 4 (Vergleichsbeispiel)

In einem 1 1-Dreihalskolben mit Intensivkühler, Rührer und Thermometer werden bei Raumtemperatur unter Stickstoff 180,01 g (0,75 mol) 3-Mercaptopropyltriethoxysilan,136,05 g (1,51 mol) Ethylenglykolmonoethylether sowie 90 µl Titantetrabutylat eingewogen. Die Mischung wird auf 60 °C erhitzt und das entstehende Ethanol bei einem Unterdruck von 200 mbar abdestilliert. Nach 1 h wird die Temperatur innerhalb von 16 h auf 120 °C erhöht und der Unterdruck auf 40 mbar reduziert.

Nach 17 h wird die Reaktion beendet. Es werden 244,04 g(99,6 %)eines trüben und leicht gelben Produkts erhalten. Aus der ¹H-NMR-Spektroskopie wird ein mittlerer Umesterungsgrad von 2,0 erhalten.

### Beispiel 5 (Vergleichsbeispiel)

In einem 500 ml-Dreihalskolben mit Destillationsbrücke, Rührer und Thermometer werden bei Raumtemperatur unter Stickstoff 59,79 g (0,25 mol) 3-Mercaptopropyltriethoxysilan, 161,42 g (0,50 mol) eines ethoxylierten Alkohols R¹H, mit R⁵ gleich CH₂-CH₂, R⁶ gleich einer aus 6 C-Atomen bestehenden, unsubstitutierten, einbindigen Alkylgruppe und m im Mittel 5 (Aduxol NHX-05B der Firma Schärer + Schläpfer) sowie 30 µl Titantetrabutylat eingewogen. Die Mischung wird auf 140 °C erhitzt und das entstehende Ethanol zunächst bei einem Unterdruck von 885 mbar entfernt. Innerhalb von 5 h wird der Unterdruck auf 19 mbar reduziert. Die Reaktion kann nach 5,8 h beendet werden.

Es werden 193,30 g (97,73 %)eines trüben und leicht gelben Produkts erhalten. Aus der ¹H-NMR-Spektroskopie wird ein mittlerer Umesterungsgrad von 2,2 ermittelt.

### Beispiel 6 (Vergleichsbeispiel)

In einem 500 ml-Dreihalskolben mit Intensivkühler, Rührer und Thermometer werden bei Raumtemperatur unter Stickstoff 59,62 g (0,25 mol) 3-Mercaptopropyltriethoxysilan, 189,03 g (0,50 mol) eines ethoxylierten Alkohols R¹H, mit R⁵ gleich CH₂-CH₂, R⁶ gleich einer aus 10 C-Atomen bestehenden, unsubstitutierten, einbindigen Alkylgruppe und m im Mittel 5 (Imbentin AG 100/35 der Firma Kolb, Schweiz) sowie 30 µl Titantetrabutylat eingewogen. Die Mischung wird auf 140 °C erwärmt und das entstehende Ethanol bei einem Unterdruck von 887 mbar entfernt. Der Unterdruck wird während der Reaktion bis auf 35 mbar reduziert. Nach 3,5 h kann die Reaktion beendet werden

Es werden 220,96 g (97,96 %) eines trüben und leicht gelben Produkts erhalten. Aus der ¹H-NMR-Spektroskopie wird ein mittlerer Umesterungsgrad von 1,9 erhalten.

### Beispiel 7 (Vergleichsbeispiel)

In einem 500 ml-Dreihalskolben mit Destillationsbrücke, Rührer und Thermometer werden bei Raumtemperatur unter Stickstoff 59,79 g (0,25 mol) 3-Mercaptopropyltriethoxysilan, 161,42 g (0,50 mol) eines ethoxylierten Alkohols R¹H, mit R⁵ gleich CH₂-CH₂, R⁶ gleich einer aus 10 C-Atomen bestehenden, unsubstitutierten, einbindigen Alkylgruppe und m im Mittel 20 (Imbentin AG 100/200 der Firma Kolb) sowie 30 µl Titantetrabutylat eingewogen. Die Mischung wird auf 140 °C erhitzt und das entstehende Ethanol zunächst bei einem Unterdruck von 887 mbar entfernt. Innerhalb von 7,5 h wird der Unterdruck auf 12 mbar reduziert. Die Reaktion kann nach 7,5 h beendet werden.

Es werden 542,56 g (97,96 %) eines festen, trüben und leicht gelben Produkts erhalten. Aus der ²⁹Si-NMR-Spektroskopie wird ein mittlerer Umesterungsgrad von 1,9 ermittelt.

### Beispiel 8

In einem 500 ml-Vierhalskolben mit Destillationsbrücke, Magnetrührer und Thermometer werden bei Raumtemperatur unter Stickstoff 141,4 g (0,593 mol) 3-Mercaptopropyltriethoxysilan, 251,7 g (0,593 mol) eines ethoxylierten Alkohols R¹H, mit R⁵ gleich CH₂-CH₂, R⁶ gleich einer aus 13 C-Atomen bestehenden, unsubstitutierten, einbindigen Alkylgruppe und m im Mittel 5 (Lutensol TO 5 der Firma BASF AG) sowie 70 mg Titantetrabutylat eingewogen. Die Mischung wird auf 140 °C erhitzt. Das entstehende Ethanol wird kontinuierlich bei einem Unterdruck von 1013 mbar entfernt. Nach 1 h wird der Unterdruck kontinuierlich innerhalb von 3 h bis auf 10 mbar reduziert. Nach insgesamt 455 min wird die Reaktion beendet. Man erhält 359,9 g (98,4 %) eines trüben und leicht roten Produkts. Aus der ¹H-NMR-Spektroskopie wird ein mittlerer Umesterungsgrad von 1 erhalten.

### Beispiel 9

In einem 10 1-Vierhalskolben mit Destillationsbrücke, KPG-Rührer und Thermometer werden bei Raumtemperatur unter Stickstoff 1038,2 g (4,35 mol) 3-Mercaptopropyltriethoxysilan, 3663,3 g (8,71 mol) eines ethoxylierten Alkohols R¹H, mit R⁵ gleich CH₂-CH₂, R⁶ gleich einer aus 13 C-Atomen bestehenden, unsubstitutierten, einbindigen Alkylgruppe und m im Mittel 5 (Lutensol TO 5 der Firma BASF AG) sowie 519 mg Titantetrabutylat eingewogen. Die Mischung wird auf 140 °C erhitzt. Das entstehende Ethanol wird kontinuierlich abdestilliert. Nach 1h wird der Unterdruck innerhalb von 430 min auf 50 mbar reduziert. Nach insgesamt 625 min wird die Reaktion beendet. Man erhält 4252,0 g (98,9 %) einer trüben und leicht orangen Flüssigkeit. Aus dem ¹³C-NMR-Spektroskopie wird ein mittlerer Umesterungsgrad von 2,0 erhalten.

### Beispiel 10

In einem 500 ml-Vierhalskolben mit Destillationsbrücke, KPG-Rührer und Thermometer werden bei Raumtemperatur unter Stickstoff 61,7 g (0,259 mol) 3-Mercaptopropyltriethoxysilan, 329,5 g (0,776 mol) eines ethoxylierten Alkohols R¹H, mit R⁵ gleich CH₂-CH₂, R⁶ gleich einer aus 13 C-Atomen bestehenden, unsubstitutierten, einbindigen Alkylgruppe und m im Mittel 5 (Lutensol TO 5 dr Firma BASF AG) sowie 30 mg Titantetrabutylat eingewogen. Die Mischung wird auf 140 °C erhitzt. Das entstehende Ethanol wird kontinuierlich zuerst bei Normaldruck und nach 1 h bei einem Unterdruck von 800 mbar entfernt. Nach weiteren 2 h wird der Unterdruck innerhalb von 3 h auf 50 mbar gesenkt. Nach 12 h wird die Reaktion beendet. Man erhält 352,7 g (99,1 %) eines trüben und farblosen Produkts. Aus der ¹³C-NMR-Spektroskopie wird ein mittlerer Umesterungsgrad von ca. 3 erhalten.

### Beispiel 11

In einem 500 ml-Dreihalskolben mit Destillationsbrücke, Rührer und Thermometer werden bei Raumtemperatur unter Stickstoff 59,64 g 3-Mercaptopropyltriethoxysilan mit einem Oligomerengehalt von ca. 30 mol % ,212,2 g (0,50 mol) eines ethoxylierten Alkohols R¹H, mit R⁵ gleich CH₂-CH₂, R⁶ gleich einer aus 13 C-Atomen bestehenden, unsubstitutierten, einbindigen Alkylgruppe und m im Mittel 5 (Lutensol TO 5 der Firam BASF AG) sowie 30 µl Titantetrabutylat eingewogen. Die Mischung wird auf 140 °C erhitzt und das entstehende Ethanol zunächst bei Normaldruck entfernt. Nach 45 min wird bei einem Unterdruck von 600 mbar destilliert.Innerhalb von 5 h wird der Unterdruck auf 40 mbar reduziert. Nach insgesamt 6 h kann die Reaktion beendet werden.

Es werden 233,4 g (96,0 %) einer, trüben und leicht orangen Flüssigkeit erhalten. Aus der ²⁹Si-NMR-Spektroskopie wird ein mittlerer Umesterungsgrad von 2,5 ermittelt.

### Beispiel 12

Die für die Kautschukmischungen verwendete Rezeptur ist in der folgenden Tabelle 1 angegeben. Dabei bedeutet die Einheit phr Gewichtsanteile bezogen auf 100 Teile des eingesetzten Rohkautschuks.

Das für die Beispielmischung I verwendete erfindungsgemäße Silan ist das in Beispiel 1 hergestellte Mercaptosilan. Seine Struktur entspricht der allgemeinen Formel I wobei R¹ aus einer Alkylpolyethergruppe -O-(CH₂-CH₂-O)ₘ-CₙH₂ₙ₊₁ mit m im Mittel 5 und n gleich 13 besteht, R² ein Gemisch aus R¹ und Ethoxygruppen im Verhältnis 1:1 ist, R³ die Trimethylengruppe -CH₂-CH₂-CH₂- ist und R⁴ gleich H ist.
Das für die Referenzmischung I verwendete Silan Si 69 ist kommerziell von der Degussa AG erhältlich. Bei dem für die Referenzmischung II verwendeten Silan handelt es sich um das Mercaptosilan aus Beispiel 2 der allgemeinen Formel III

(R¹²)ₚ(R¹³)₃₋ₚSi-(CH₂)₃-SH III

mit R¹² = Ethoxy und R¹³ einem Gemisch Dodecoxy und Tetradecoxy, p im Mittel 1 und das Verhältnis Dodecoxy zu Tetradecoxy im Massenverhältnis 72:28 ist.

In den Referenzmischungen I und II und der Beispielmischung I sind die Grundmischungen (1. + 2. Stufe) bis auf die verwendeten Silane identisch. Die Referenzmischung I unterscheidet sich zur Referenzmischung II in den eingesetzten Mengen des Schwefels, des Beschleunigers DPG und des Ultrabeschleunigers TBzTD (3. Stufe). Die Referenzmischung I enthält Si 69, ein polysulfidisches Silan. Das Beschleunigersystem muss an das verwendete Silan angepasst sein. Da Si 69 ein Schwefeldonor ist und das Mercaptosilan kein Schwefeldonor ist, ist in der Referenzmischung II und in der erfindungsgemäßen Beispielmischung I zum Ausgleich weniger Schwefel eingesetzt als in der Referenzmischung I mit Si 69.

**Tabelle 1**

| Substanz | Menge [phr] | Menge [phr] | Menge [phr] |
|---|---|---|---|
| 1. Stufe | Referenz- mischung I | Referenz- mischung II | Beispiel- mischung I |
| Buna VSL 5025-1 | 96 | 96 | 96 |
| Buna CB 24 | 30 | 30 | 30 |
| Ultrasil 7000 GR | 80 | 80 | 80 |
| ZnO | 3 | 3 | 3 |
| Stearinsäure | 2 | 2 | 2 |
| Naftolen ZD | 10 | 10 | 10 |
| Vulkanox 4020 | 1,5 | 1,5 | 1,5 |
| Protector G 3108 | 1 | 1 | 1 |
| Si 69 | 10 | - | - |
| Silan aus Beispiel 2 | - | 10 | - |
| Silan aus Beispiel 1 | - | - | 10 |

| 2. Stufe | | | |
|---|---|---|---|
| Batch Stufe 1 | | | |
| 3. Stufe | | | |
| Batch Stufe 2 | | | |
| Vulkacit D | 2 | 0,25 | 0,25 |
| Perkacit TBzTD | 0,2 | 0,5 | 0,5 |
| Vulkacit CZ | 1,5 | 1,5 | 1,5 |
| Schwefel | 1,5 | 2,2 | 2,2 |

Bei dem Polymer VSL 5025-1 handelt es sich um ein in Lösung polymerisiertes SBR-Copolymer der Bayer AG, mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 auf.

Bei dem Polymer Buna CB 24 handelt es sich um ein cis-1,4-Polybutadien (Neodymtyp) der Bayer AG, mit cis-1,4-Gehalt von mindestens 96 % und einer Mooney-Viskosität von 44±5.

Ultrasil 7000 GR ist eine leicht dispergierbare Kieselsäure der Degussa AG und besitzt eine BET-Oberfläche von 170 m²/g.

Das Kopplungsreagenz Si 69, ein Bis-(triethoxysilylpropyl)polysulfid ist ein Produkt der Degussa AG.

Als aromatisches Öl wird Naftolen ZD der Chemetall verwendet, bei Vulkanox 4020 handelt es sich um 6PPD der Bayer AG und Protektor G3108 ist ein Ozonschutzwachs der Paramelt B.V.. Vulkacit D (DPG) und Vulkacit CZ (CBS) sind Handelsprodukte der Bayer AG. Perkacit TBzTD (Tetrabenzylthiuramdisulfid) ist ein Produkt von Flexsys N.V..

Die Kautschukmischung wird dreistufig in einem Innenmischer gemäß Tabelle 2 hergestellt, wobei wirtschaftlich vertretbare Mischzeiten verwendet werden.

**Tabelle 2:**

| **Stufe 1** | |
|---|---|
| **Einstellungen** | |
| Mischaggregat | Werner & Pfleiderer |
| Friktion | 1:1 |
| Drehzahl | 60 min⁻¹ |
| Stempeldruck | 5,5 bar |
| Leervolumen | 1,6 L |
| Füllgrad | 0,56 |
| Durchflußtemp. | 70 °C |

| **Mischvorgang** | |
|---|---|
| 0 bis 1 min | Buna VSL 5025-1 + Buna CB 24 |
| 1 bis 2 min | ½ Ultrasil 7000 GR, ZnO, Stearinsäure, Naftolen ZD, Silan |
| 2 bis 3 min | ½ Ultrasil 7000 GR, Vulkanox 4020, Protector G3108 |
| 3 bis 4 min | mischen und ausfahren |
| Batch-Temp. | 140-150°C |
| Lagerung | 24 h bei Raumtemperatur |
| | |

| **Stufe 2** | |
|---|---|
| **Einstellungen** | |
| Mischaggregat | wie in Stufe 1 bis auf: |
| Drehzahl | 70 min⁻¹ |
| Füllgrad | 0,53 |
| Durchflußtemp. | 80 °C |

| **Mischvorgang** | |
|---|---|
| 0 bis 2 min | Batch Stufe 1 aufbrechen |
| 2 bis 3 min | Batchtemperatur 145-150°C durch Drehzahlvariation halten |
| 3 min | ausfahren |
| Batch-Temp. | 145-150°C |
| Lagerung | 4 h bei Raumtemperatur |

| **Stufe 3** | |
|---|---|
| **Einstellungen** | |
| Mischaggregat | wie in Stufe 1 bis auf |
| Drehzahl | 40 min⁻¹ |
| Füllgrad | 0,50 |
| Durchflußtemp. | 50 °C |

| **Mischvorgang** | |
|---|---|
| 0 bis 2 min | Batch Stufe 2 + Vulkacit CZ + Vulkazit D + Perkacit TBzTD + Schwefel |
| 2 min | ausfahren und auf Labormischwalzwerk Fell bilden |
| | (Durchmesser 200 mm, Länge 450 mm, Durchflußtemperatur 50°C) |
| | Homogenisieren: |
| | 5* links, 5* rechts einschneiden und umklappen sowie |
| | 5* bei engem Walzenspalt (3 mm) und |
| | 5* bei weitem Walzenspalt (6 mm) stürzen und anschließend ein Fell ausziehen |
| Batch-Temp. | 90-100°C |

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgt gemäß den in Tabelle 3 angegebenen Prüfmethoden.

**Tabelle 3**

| Physikalische Testung | Norm/ Bedingungen |
|---|---|
| ML 1+4, 100°C (3. Stufe) | DIN 53523/3, ISO 667 |
| Anvulkanisationsverhalten, 130°C | DIN 53523/4, ISO 667 |
| Vulkameterprüfung, 165°C | DIN 53529/3, ISO 6502 |
| Dₘₐₓ - Dₘᵢₙ | |
| t10% | |
| t80% - t20% | |
| Zugversuch am Ring, 23°C | DIN 53504, ISO 37 |
| Zugfestigkeit | |
| Spannungswerte | |
| Bruchdehnung | |
| Shore-A-Härte, 23°C | DIN 53 505 |
| Ball-Rebound, 60°C | DIN EN ISO 8307 Stahlkugel 19 mm, 28 g |
| DIN-Abrieb, 10 N Kraft | DIN 53 516 |
| Viskoelastische Eigenschaften | DIN 53 513, ISO 2856 |
| 0 und 60°C, 16 Hz, 50 N Vorkraft und 25 N Amplitudenkraft | |
| Komplexer Modul E* (MPa) | |
| Verlustfaktor tan δ (-) | |

In der Tabelle 4 sind die gummitechnischen Daten für Rohmischung und Vulkanisat angegeben.

**Tabelle 4**

| **Rohmischungsdaten** | | | | |
|---|---|---|---|---|
| Merkmal: | Einheit: | Referenz-mischung I | Referenz-mischung ll | Beispiel-mischung I |
| ML(1 +4) bei 100°C, 3.Stufe | [ME] | 63 | 64 | 65 |
| Dmax-Dmin | [dNm] | 21,6 | 14,6 | 17,9 |
| t 10% | [min] | 1,5 | 0,5 | 1,2 |
| t 80% - t 20% | [min] | 3,1 | 9,0 | 1,1 |
| Scorch-Zeit, t5 | [min] | 25,68 | 3,35 | 9,13 |
| Scorch-Zeit, t35 | [min] | 33,60 | 4,77 | 14,07 |

| **Vulkanisatdaten** | | | | |
|---|---|---|---|---|
| Merkmal: | Einheit: | | | |
| Zugfestigkeit | [MPa] | 13,5 | 10,0 | 14,7 |
| Spannungswert 100% | [MPa] | 2,3 | 1,7 | 2,1 |
| Spannungswert 300% | [MPa] | 10,6 | - | 12,2 |
| Spannungswert 300%/100% | [-] | 4,6 | - | 5,8 |
| Bruchdehnung | [%] | 355 | 290 | 340 |
| Shore-A-Härte | [SH] | 67 | 57 | 61 |
| Ball-Rebound, 60°C | [%] | 64,9 | 70,7 | 73,3 |
| DIN-Abrieb | [mm³] | 99 | 56 | 77 |
| Dyn. Dehnmodul E*, 0°C | [MPa] | 18,4 | 10,1 | 11,2 |
| Dyn. Dehnmodul E*, 60°C | [MPa] | 9,1 | 7,1 | 7,6 |
| Verlustfaktor tan δ, 0°C | [-] | 0,381 | 0,281 | 0,317 |
| Verlustfaktor tan δ, 60°C | [-] | 0,103 | 0,080 | 0,064 |

Aus den Ergebnissen in Tabelle 4 ist erkennbar, dass bei den hier verwendeten Mischzeiten die Mischungen enthaltend das erfindungsgemäße Silan den Referenzmischungen überlegen ist. Referenzmischung I, enthaltend Si 69, zeigt das schlechteste Wertebild. Die Referenzmischung I weist einen niedrigen Spannungswert 300%/100% Wert auf, der ein Maß für die Verstärkung ist. Die Referenzmischung I besitzt den niedrigsten Ball-Rebound und den höchsten tan δ, 60°C, was auf einen hohen Rollwiderstand hindeutet. Außerdem ist der Abrieb am schlechtesten.
Bei Referenzmischung II ist der Abrieb zwar aufgrund der höheren Verstärkung deutlich verbessert. Allerdings fallen die Rohmischungsdaten deutlich ab. Mit einer Scorch-Zeit t35 von unter 5 min und einer t10%-Zeit von 0,5 min ist diese Mischung nicht verarbeitbar.
Nur Beispielmischung I mit dem erfindungsgemäßen Silan zeigt hier eine hohe Verstärkung bei gleichzeitig gewährleisteter Verabeitung. Die Scorchzeit t35 ist gegenüber Referenzmischung II um ca. 10 min verlängert, die t10% mehr als verdoppelt. Im Gegensatz zur Referenzmischung II ist Beispielmischung I verarbeitbar. Gleichzeitig zeigen Ball-Rebound und tan δ, 60°C den niedrigen Hystereseverlust. Der DIN-Abrieb ist gegenüber Referenzmischung I mit dem kommerziellen Silan Si 69 um 13% verringert.

### Beispiel 13

In diesem Beispiel wird die Beispielmischung I, enthaltend das erfindungsgemäße Silan aus Beispiel 1, mit Mischungen, enthaltend Mercaptosilane, die mit Alkylpolyethergruppen substituiert sind, deren substituierter oder unsubstituierter Alkylrest aus weniger als 11 Kohlenstoffeinheiten aufgebaut ist, verglichen.
Bei dem für die Referenzmischung III verwendeten Silan handelt es sich um das Mercaptosilan aus Beispiel 3 der allgemeinen Formel IV

(R¹²)ₚ(R¹⁴)₃₋ₚSi- (CH₂)₃-SH IV

mit R¹²= Ethoxy und R¹⁴= Alkylpolyethergruppen -O-(CH₂-CH₂-O)ₘ-CₙH₂ₙ₊₁ mit m = 2, n = 1 und p im Mittel 1.

Bei dem für die Referenzmischung IV verwendeten Silan handelt es sich um das Mercaptosilan aus Beispiel 4 der allgemeinen Formel IV mit R¹² = Ethoxy und R¹⁴= Alkylpolyethergruppen -O-(CH₂-CH₂-O)ₘ-CₙH₂ₙ₊₁ mit m = 1, n = 2 und p im Mittel 1.

Bei dem für die Referenzmischung V verwendeten Silan handelt es sich um das Mercaptosilan aus Beispiel 5 der allgemeinen Formel IV mit R¹² = Ethoxy und R¹⁴= Alkylpolyethergruppen -O-(CH₂-CH₂-O)ₘ-CₙH₂ₙ₊₁ mit m im Mittel 5, n = 6 und p im Mittel 0,8.

Bei dem für die Referenzmischung VI verwendeten Silan handelt es sich um das Mercaptosilan aus Beispiel 6 der allgemeinen Formel IV mit R¹²= Ethoxy und R¹⁴= Alkylpolyethergruppen -O-(CH₂-CH₂-O)ₘ-CₙH₂ₙ₊₁ mit m im Mittel 5, n = 10 und p im Mittel 1,1.

Die für die Kautschukmischungen verwendete Rezeptur ist in der folgenden Tabelle 5 angegeben. Dabei bedeutet wieder die Einheit phr Gewichtsanteile bezogen auf 100 Teile des eingesetzten Rohkautschuks.

**Tabelle 5**

| Substanz | Menge [phr] | Menge [phr] | Menge [phr] | Menge [phr] | Menge [phr] |
|---|---|---|---|---|---|
| 1. Stufe | Referenz-mischung III | Referenz-mischung IV | Referenz-mischung V | Referenz-mischung VI | Beispiel-mischung I |
| Buna VSL 5025-1 | 96 | 96 | 96 | 96 | 96 |
| Buna CB 24 | 30 | 30 | 30 | 30 | 30 |
| Ultrasil 7000GR | 80 | 80 | 80 | 80 | 80 |
| ZnO | 3 | 3 | 3 | 3 | 3 |
| Stearinsäure | 2 | 2 | 2 | 2 | 2 |
| Naftolen ZD | 10 | 10 | 10 | 10 | 10 |
| Vulkanox 4020 | 1,5 | 1,5 | 1,5 | 1,5 | 1,5 |
| Protector G3108 | 1 | 1 | 1 | 1 | 1 |
| Silan aus Beispiel 3 | 10 | - | - | - | - |
| Silan aus Beispiel 4 | - | 10 | - | - | - |
| Silan aus Beispiel 5 | - | - | 10 | - | - |
| Silan aus Beispiel 6 | - | - | - | 10 | - |
| Silan aus Beispiel 1 | - | - | - | - | 10 |

| 2. Stufe | | | | | |
|---|---|---|---|---|---|
| Batch Stufe 1 | | | | | |

| 3. Stufe | | | | | |
|---|---|---|---|---|---|
| Batch Stufe 2 | | | | | |
| Vulkacit D | 0,25 | 0,25 | 0,25 | 0,25 | 0,25 |
| Perkacit TBzTD | 0,5 | 0,5 | 0,5 | 0,5 | 0,5 |
| Vulkacit CZ | 1,5 | 1,5 | 1,5 | 1,5 | 1,5 |
| Schwefel | 2,2 | 2,2 | 2,2 | 2,2 | 2,2 |

Die Kautschukmischung wird dreistufig in einem Innenmischer gemäß Tabelle 2 hergestellt.
Die gummitechnische Prüfung erfolgt gemäß den in Tabelle 3 angegebenen Prüfmethoden.

Bei den verwendeten Mischbedingungen zeigt die Beispielmischung I das beste Verarbeitungsverhalten, wie sich aus den in der Tabelle 6 angegebenen gummitechnischen Daten für die Rohmischungen ergibt.

**Tabelle 6**

| **Rohmischungsdaten** | | | | | | |
|---|---|---|---|---|---|---|
| Merkmal: | Einheit: | Referenz-mischung III | Referenz-mischung IV | Referenz- mischung V | Referenz-mischung VI | Beispiel-mischung I |
| ML(1+4) bei 100°C, 3.Stufe | [ME] | nicht meßbar | nicht meßbar | 78 | 66 | 65 |
| Dmax-Dmin | [dNm] | 8,9 | 8,8 | 15,3 | 16,4 | 17,9 |
| t 10% | [min] | 0,4 | 0,4 | 0,5 | 1,0 | 1,2 |
| t 80% - t 20% | [min] | 1,8 | 5,5 | 0,8 | 1,0 | 1,1 |
| Scorch-Zeit, t5 | [min] | 6,23 | 7,92 | 2,93 | 6,26 | 9,13 |
| Scorch-Zeit, t35 | [min] | 12,04 | 15,10 | 4,96 | 10,66 | 14,07 |

Die Ergebnisse zeigen, dass bei Verwendung der Referenzsilane aus Beispiel 3 und 4 mit den kürzesten Alkylpolyethergruppen Mischungen erhalten werden die weder verarbeitbar noch einsetzbar sind. Sie weisen die kürzesten t10%-Zeiten auf, die Mooneyviskosität ist nicht einmal feststellbar. Anhand der geringen Differenzen der Drehmomente im MDR erkennt man, das diese Referenzmischungen III und IV nicht vulkanisierbar sind.
Nur bei Verwendung von längerkettigen Alkylpolyethergruppen erhält man eine akzeptable Vernetzungsausbeute, die sich im deutlichen Anstieg der Differenzen der Drehmomente widerspiegelt. Allerdings zeigt sich, dass nur die Beispielmischung mit dem erfindungsgemäßen Mercaptosilan akzeptable Verabeitungseigenschaften aufweist. Sie zeigt die niedrigste Mooney-Viskosität, die längste t10%- und die längste Mooney-Scorch-Zeit. Gegenüber Referenzmischung VI ist die t10%-Zeit um 20% gegenüber Referenzmischung V sogar um 140% verlängert. Die Mooney-Scorch-Zeit t35 ist gegenüber Referenzmischung VI um 32% gegenüber Referenzmischung V um 184% verlängert.

### Beispiel 14

In diesem Beispiel wird ein erfindungsgemäßes Mercaptosilan, dessen Alkylteil der Alkylpolyethergruppen eine gewisse Mindestlänge von 11 C-Einheiten aufweist, verglichen mit einem Mercaptosilan, dessen Alkylteil der Alkylpolyethergruppen nicht diese Mindestlänge aufweist bei gleichzeitig vergrößerter Länge des Polyetherteils.

Die Beispielmischung I enthält das erfindungsgemäße Silan aus Beispiel 1.
Bei dem für die Referenzmischung VII verwendeten Silan handelt es sich um das Mercaptosilan aus Beispiel 7 der allgemeinen Formel IV mit R¹² = Ethoxy und R¹⁴= Alkylpolyethergruppen -O-(CH₂-CH₂-O)ₘ-CₙH₂ₙ₊₁ mit m im Mittel 20, n = 10 und p=1,1.

Die für die Kautschukmischungen verwendete Rezeptur ist in der folgenden Tabelle 7 angegeben. Dabei bedeutet wieder die Einheit phr Gewichtsanteile bezogen auf 100 Teile des eingesetzten Rohkautschuks.

**Tabelle 7**

| Substanz | Menge [phr] | Menge [phr] |
|---|---|---|
| 1. Stufe | Beispiel-mischung I | Referenz-mischung VII |
| Buna VSL 5025-1 | 96 | 96 |
| Buna CB 24 | 30 | 30 |
| Ultrasil 7000 GR | 80 | 80 |
| ZnO | 3 | 3 |
| Stearinsäure | 2 | 2 |
| Naftolen ZD | 10 | 10 |
| Vulkanox 4020 | 1,5 | 1,5 |
| Protector G 3108 | 1 | 1 |
| Silan aus Beispiel 1 | 10 | - |
| Silan aus Beispiel 7 | - | 10 |

| 2. Stufe | | |
|---|---|---|
| Batch Stufe 1 | | |

| 3. Stufe | | |
|---|---|---|
| Batch Stufe 2 Vulkacit D | 0,25 | 0,25 |
| Perkacit TBzTD | 0,5 | 0,5 |
| Vulkacit CZ | 1,5 | 1,5 |
| Schwefel | 2,2 | 2,2 |

Die Kautschukmischung wird dreistufig in einem Innenmischer gemäß Tabelle 2 hergestellt.
Die gummitechnische Prüfung erfolgt gemäß den in Tabelle 3 angegebenen Prüfmethoden.

In der Tabelle 8 sind die gummitechnischen Daten für Rohmischung und Vulkanisat angegeben.

**Tabelle 8**

| **Rohmischungsdaten** | | | |
|---|---|---|---|
| Merkmal: | Einheit: | Beispiel-mischung I | Referenz-mischung VII |
| ML(1+4) bei 100°C, 3.Stufe | [ME] | 65 | 76 |
| Dmax-Dmin | [dNm] | 17,9 | 29,3 |
| t 10% | [min] | 1,2 | 0,5 |
| t 80% - t 20% | [min] | 1,1 | 1,5 |
| Scorch-Zeit, t5 | [min] | 9,13 | 12,30 |
| Scorch-Zeit, t35 | [min] | 14,07 | 16,00 |

| **Vulkanisatdaten** | | | |
|---|---|---|---|
| Merkmal: | Einheit: | | |
| Zugfestigkeit | [MPa] | 14,7 | 13,9 |
| Spannungswert 100% | [MPa] | 2,1 | 2,1 |
| Spannungswert 300% | [MPa] | 12,2 | 9,8 |
| Spannungswert 300%/100% | [-] | 5,8 | 4,7 |
| Bruchdehnung | [%] | 340 | 385 |
| Shore-A-Härte | [SH] | 61 | 66 |
| Ball-Rebound, 60°C | [%] | 73,3 | 67,2 |
| DIN-Abrieb | [mm³] | 77 | 114 |
| Dyn. Dehnmodul E*, 0°C | [MPa] | 11,2 | 17,2 |
| Dyn. Dehnmodul E*, 60°C | [MPa] | 7,6 | 10,3 |
| Verlustfaktor tan δ, 0°C | [-] | 0,317 | 0,336 |
| Verlustfaktor tan δ, 60°C | [-] | 0,064 | 0,074 |

Es zeigt sich wieder, dass nur Beispielmischung I ein ausgewogenes Wertebild liefert. Die Referenzmischung VII zeigt neben der hohen Mooney-Viskosität und dem großem Dmax-Dmin Wert eine sehr kurze t10%-Zeit. Eine aktzeptable Verarbeitung dieser Referenz-Mischung kann nicht gewährleistet werden. Daneben erreicht die Referenz-mischung VII in den Vulkanisatdaten nicht das hohe Niveau der Beispielmischung I. Neben dem schwachen Verstärkungsfaktor (Spannungswert 300%/100%) und dem niedrigen Ball-Rebound fällt vor allem der schlechte DIN-Abrieb auf. Gegenüber der Beispielmischung ist dieser um 48% erhöht. Eine Verlängerung des Polyetherteils der Alkylpolyethergruppen (m = 5 für Silan aus Beispiel 1 im Vergleich zu m = 20 für Silan aus Beispiel 7) führt also nicht zum Lösen der erfindungsgemäßen Aufgabe, Mercaptosilane zur Verfügung zu stellen, die auch bei wirtschaftlich vertretbaren Mischzeiten bei gewährleisteter Verarbeitung zu einer hohen Verstärkung, einem geringen Hystereseverlust und einem hohen Abriebwiderstand bei gleichzeitig gegenüber trimethoxy- und triethoxysubstituierten Mercaptosilanen reduzierter Alkoholemission führen.

### Beispiel 15

In diesem Beispiel werden erfindungsgemäße Mercaptosilane der allgemeinen Formel I mit unterschiedlichen Umesterungsgraden, d.h. mit Unterschieden in den Substituenten R² verwendet.

Das für die Beispielmischung II verwendete erfindungsgemäße Silan ist das in Beispiel 8 hergestellte Mercaptosilan. Seine Struktur entspricht der allgemeinen Formel I, wobei R¹ aus einer Alkylpolyethergruppe -O-(CH₂-CH₂-O)ₘ-CₙH₂ₙ₊₁ mit m im Mittel 5 und n gleich 13 besteht, R² gleich Ethoxy CH₃CH₂O- ist, R³ die Trimethylengruppe -CH₂-CH₂-CH₂- ist und R⁴ gleich H ist.
Das für die Beispielmischung III verwendete erfindungsgemäße Silan ist das in Beispiel 9 hergestellte Mercaptosilan. Seine Struktur entspricht der allgemeinen Formel I, wobei R¹ aus einer Alkylpolyethergruppe -O-(CH₂-CH₂-O) ₘ-CₙH₂ₙ₊₁ mit m im Mittel 5 und n gleich 13 besteht, R² gleich ein Gemisch aus R¹ und Ethoxy CH₃CH₂O- im Verhältnis 1:1 ist, R³ die Trimethylengruppe -CH₂-CH₂-CH₂- ist und R⁴ gleich H ist.
Das für die Beispielmischung IV verwendete erfindungsgemäße Silan ist das in Beispiel 10 hergestellte Mercaptosilan. Seine Struktur entspricht der allgemeinen Formel I wobei R¹ aus einer Alkylpolyethergruppe -O-(CH₂-CH₂-O)ₘ-CₙH₂ₙ₊₁ mit m im Mittel 5 und n gleich 13 besteht, R² gleich R¹ ist, R³ die Trimethylengruppe -CH₂-CH₂-CH₂- ist und R⁴ gleich H ist. Für die Referenzmischung VIII wird Si 69 verwendet.
Bei dem für die Referenzmischung IX verwendeten Silan handelt es sich wieder um das Silan aus Beispiel 2.

Die für die Kautschukmischungen verwendete Rezeptur ist in der folgenden Tabelle 9 angegeben. Dabei bedeutet wieder die Einheit phr Gewichtsanteile bezogen auf 100 Teile des eingesetzten Rohkautschuks. Die verwendeten Mercaptosilane in den erfindungsgemäßen Beispielmischungen II bis IV und der Referenzmischung IX werden isomolar dosiert.

**Tabelle 9**

| Substanz | Menge [phr] | Menge [phr] | Menge [phr] | Menge [phr] | Menge [phr] |
|---|---|---|---|---|---|
| 1. Stufe | Beispiel-mischung II | Beispiel-mischung III | Beispiel-mischung IV | Referenz-mischung VIII | Referenz-mischung IX |
| Buna VSL 5025-1 | 96 | 96 | 96 | 96 | 96 |
| Buna CB 24 | 30 | 30 | 30 | 30 | 30 |
| Ultrasil 7000GR | 80 | 80 | 80 | 80 | 80 |
| ZnO | 3 | 3 | 3 | 3 | 3 |
| Stearinsäure | 2 | 2 | 2 | 2 | 2 |
| Naftolen ZD | 10 | 10 | 10 | 10 | 10 |
| Vulkanox 4020 | 1,5 | 1,5 | 1,5 | 1,5 | 1,5 |
| Protector G3108 | 1 | 1 | 1 | 1 | 1 |
| Silan aus Beispiel 8 | 6,2 | - | - | - | - |
| Silan aus Beispiel 9 | - | 10 | - | - | - |
| Silan aus Beispiel 10 | - | - | 13,8 | - | - |
| Si 69 | - | - | - | 6,4 | - |
| Silan aus Beispiel 2 | - | - | - | - | 5,4 |

| 2. Stufe | | | | | |
|---|---|---|---|---|---|
| Batch Stufe 1 | | | | | |

| 3. Stufe | | | | | |
|---|---|---|---|---|---|
| Batch Stufe 2 | | | | | |
| Vulkacit D | 0,25 | 0,25 | 0,25 | 2 | 0,25 |
| Perkacit TBzTD | 0,5 | 0,5 | 0,5 | 0,2 | 0,5 |
| Vulkacit CZ | 1,5 | 1,5 | 1,5 | 1,5 | 1,5 |
| Schwefel | 2,2 | 2,2 | 2,2 | 1,5 | 2,2 |

Die Kautschukmischung wird dreistufig in einem Innenmischer gemäß Tabelle 2 hergestellt.
Die gummitechnische Prüfung erfolgt gemäß den in Tabelle 3 angegebenen Prüfmethoden.

In der Tabelle 10 sind die gummitechnischen Daten für Rohmischung und Vulkanisat angegeben.

**Tabelle 10**

| **Rohmischungsdaten** | | | | | | |
|---|---|---|---|---|---|---|
| Merkmal: | Einheit: | Beispiel-mischung II | Beispiel-mischung III | Beispiel-mischung IV | Referenz-mischung VIII | Referen-mischung IX |
| ML(1+4) bei 100°C, 3.Stufe | [ME] | 65 | 60 | 61 | 66 | 83 |
| Dmax-Dmin | [dNm] | 21,1 | 18,8 | 15,9 | 18,7 | 29,9 |
| t 10% | [min] | 1,4 | 1,4 | 1,1 | 1,5 | 0,4 |
| t 80% - t 20% | [min] | 1,5 | 1,3 | 1,1 | 3,2 | 1,8 |
| Scorch-Zeit, t5 | [min] | 15,9 | 12,0 | 6,2 | 31,3 | 16,5 |
| Scorch-Zeit, t35 | [min] | 20,6 | 16,9 | 11,3 | 42,4 | 19,1 |

| **Vulkanisatdaten** | | | | | | |
|---|---|---|---|---|---|---|
| Merkmal: | Einheit: | | | | | |
| Zugfestigkeit | [MPa] | 12,7 | 13,3 | 11,9 | 12,4 | 14,4 |
| Spannungswert 100% | [MPa] | 2,0 | 2,0 | 2,0 | 1,7 | 1,8 |
| Spannungswert 300% | [MPa] | 11,5 | 11,6 | - | 8,5 | 9,2 |
| Spannungswert 300%/100% | [-] | 5,8 | 5,8 | - | 5,0 | 5,1 |
| Bruchdehnung | [%] | 315 | 330 | 295 | 380 | 395 |
| Shore-A-Härte | [SH] | 62 | 61 | 59 | 63 | 67 |
| Ball-Rebound, 60°C | [%] | 70,3 | 72,5 | 75,0 | 64,5 | 68,4 |
| DIN-Abrieb | [mm³] | 73 | 79 | 65 | 88 | 79 |
| Dyn. Dehnmodul E*, 0°C | [MPa] | 15,6 | 12,9 | 10,4 | 21,5 | 26,7 |
| Dyn. Dehnmodul E*, 60°C | [MPa] | 8,5 | 8,1 | 7,5 | 9,7 | 12,6 |
| Verlustfaktor tan δ, 0°C | [-] | 0,390 | 0,362 | 0,288 | 0,426 | 0,333 |
| Verlustfaktor tan δ, 60°C | [-] | 0,083 | 0,076 | 0,068 | 0,130 | 0,104 |

Referenzmischung VIII ist mit dem handelsüblichen Si 69 hergestellt. Die mit dem nicht erfindungsgemäßen Mercaptosilan nach dem Stand der Technik hergestellte Referenzmischung IX zeigt bei den hier verwendeten Mischbedingungen zwar Vorteile in den Vulkanisatdaten gegenüber Referenzmischung VIII, die Abstriche in den Rohmischungsdaten vor allem die deutlich erhöhte Mooney-Viskosität sowie die extrem kurze t10%-Zeit, zeigen aber, dass diese Mischung kommerziell nicht verarbeitbar ist. Nur die mit den erfindungsgemäßen Mercaptosilanen hergestellten Beispielmischungen sind alle kommerziell verarbeitbar. Die t10%-Zeiten liegen in der Größenordnung der Referenzmischung VIII. Die Mooney-Viskositäten sind gegenüber Referenzmischung VIII sogar noch erniedrigt. Bei den Vulkanisateigenschaften weisen alle Beispielmischungen gegenüber den beiden Referenzmischungen Vorteile auf. Der tan δ Wert bei 60°C ist bei allen deutlich erniedrigt, der Ball-Rebound bei allen signifikant erhöht. Ebenso liegt der DIN-Abrieb bei allen drei Beispielmischungen auf einem niedrigen Niveau. Es ist also unabhängig von den Umesterungsgraden davon auszugehen, dass ein Reifen mit einer Lauffläche, basierend auf Kautschukmischungen mit den erfindungsgemäßen Mercaptosilanen deutliche Vorteile im Rollwiderstand und Abrieb gegenüber dem Stand der Technik aufweist.

### Beispiel 16

In diesem Beispiel wird gezeigt, daß das Organosilan ein Gemisch aus unterschiedlichen Silanen entsprechend der Formel I oder deren Kondensationsprodukten sein kann und zu vorteilhaften Gummiwerten führt. Beispielmischung V enthält das erfindungsgemäße Silan aus Beispiel 1. Beispielmischung VI enthält das erfindungsgemäße Silan aus Beispiel 11. Das erfindungsgemäße Silan aus Beispiel 11 entspricht einem Gemisch von einem Silan, dessen Struktur der allgemeinen Formel I entspricht, wobei R¹ aus einer Alkylpolyethergruppe -O-(CH₂-CH₂-O)ₘ-CₙH₂ₙ₊₁ mit m im Mittel 5 und n gleich 13 besteht, R² ein Gemisch aus R¹ und Ethoxygruppen im Verhältnis 1,5:0,5 ist, R³ die Trimethylengruppe -CH₂-CH₂-CH₂- ist und R⁴ gleich H ist und dessen Kondensationsprodukten im Verhältnis von ca. 70:30. Die für die Kautschukmischungen verwendete Rezeptur ist in der folgenden Tabelle 11 angegeben. Dabei bedeutet wieder die Einheit phr Gewichtsanteile bezogen auf 100 Teile des eingesetzten Rohkautschuks.

**Tabelle 11**

| Substanz | Menge [phr] | Menge [phr] |
|---|---|---|
| 1. Stufe | Beispiel-mischung V | Beispiel-mischung VI |
| Buna VSL 5025-1 | 96 | 96 |
| Buna CB 24 | 30 | 30 |
| Ultrasil 7000 GR | 80 | 80 |
| ZnO | 3 | 3 |
| Stearinsäure | 2 | 2 |
| Naftolen ZD | 10 | 10 |
| Vulkanox 4020 | 1,5 | 1,5 |
| Protector G 3108 | 1 | 1 |
| Silan aus Beispiel 1 | 9,97 | - |
| Silan aus Beispiel 11 | - | 9,97 |

| 2. Stufe | | |
|---|---|---|
| Batch Stufe 1 | | |

| 3. Stufe | | |
|---|---|---|
| Batch Stufe 2 | | |
| Vulkacit D | 0,25 | 0,25 |
| Perkacit TBzTD | 0,5 | 0,5 |
| Vulkacit CZ | 1,5 | 1,5 |
| Schwefel | 2,2 | 2,2 |

Die Kautschukmischung wird dreistufig in einem Innenmischer gemäß Tabelle 2 hergestellt.
Die gummitechnische Prüfung erfolgt gemäß den in Tabelle 3 angegebenen Prüfmethoden.

In der Tabelle 12 sind die gummitechnischen Daten für Rohmischung und Vulkanisat angegeben.

**Tabelle 12**

| **Rohmischungsdaten** | | | |
|---|---|---|---|
| Merkmal: | Einheit: | Beispiel-mischung V | Beispiel-mischung VI |
| ML(1+4) bei 100°C, 3.Stufe | [ME] | 63 | 66 |
| Dmax-Dmin | [dNm] | 23,1 | 23,8 |
| t 10% | [min] | 1,1 | 1,1 |
| t 80% - t 20% | [min] | 1,4 | 1,7 |
| Scorch-Zeit, t5 | [min] | 12,88 | 22,95 |
| Scorch-Zeit, t35 | [min] | 18,24 | 27,79 |

| **Vulkanisatdaten** | | | |
|---|---|---|---|
| Merkmal: | Einheit: | | |
| Zugfestigkeit | [MPa] | 13,2 | 13,0 |
| Spannungswert 100% | [MPa] | 2,0 | 2,0 |
| Spannungswert 300% | [MPa] | 10,5 | 9,9 |
| Spannungswert 300%/100% | [-] | 5,3 | 5,0 |
| Bruchdehnung | [%] | 345 | 360 |
| Shore-A-Härte | [SH] | 63 | 65 |
| Ball-Rebound, 60°C | [%] | 70,0 | 69,9 |
| DIN-Abrieb | [mm³] | 81 | 87 |
| Dyn. Dehnmodul E*, 0°C | [MPa] | 12,7 | 14,2 |
| Dyn. Dehnmodul E*, 60°C | [MPa] | 8,4 | 9,1 |
| Verlustfaktor tan δ, 0°C | [-] | 0,334 | 0,332 |
| Verlustfaktor tan δ, 60°C | [-] | 0,074 | 0,077 |

Tabelle 12 zeigt, daß beide Beispielmischungen nahezu identische Werte ergeben. Das Verstärkungsniveau sowie der tan δ liegen auch in der Beispielmischung VI auf einem hohen Niveau wie in der Beispielmischung V. Der einzige signifikante Unterschied liegt in der Scorch-Zeit. Hier weist Beispielmischung VI mit dem erfindungsgemäßen Silan aus Beispiel 11 sogar einen deutlichen Vorteil auf. Die verlängerte Scorch-Zeit zeigt, daß die Scorchsicherheit hier erhöht ist, was vorteilhaft für die Verarbeitung von Gummimischungen ist.
Ein Gemisch aus unterschiedlichen Silanen entsprechend der Formel I oder deren Kondensationsprodukten ist deshalb eine bevorzugte Ausführungsform der Erfindung.

### Beispiel 17

### HS-CH₂-CH₂-CH₂-Si (OEt)₂(OCH (CH₃) -CH₂)₅-O-C₁₂H₂₅

In einer Vakuumdestillationsapparatur werden 79,5 g HS-CH₂-CH₂-CH₂-Si (OEt)₃, 158, 7 g Polypropylenglykolmonododecylether (H- (OCH (CH₃)-CH₂)₅-O-C₁₂H₂₅ (Firma Schärer & Schläpfer AG) und 0,05 g Ti(OBu)₄ gemischt. Die Mischung wird auf 141°C erhitzt und der Druck von 600 mbar innerhalb von 5,5 h auf 100 mbar gesenkt. Der freiwerdende, flüchtige Alkohol wird abdestilliert. Anschließend wird die Mischung für 4 h auf 141°C bei 80 mbar erhitzt. Nach Beendigung der Umsetzung wird das erhaltene Produkt auf Raumtemperatur abgekühlt.

Die isolierte Auswaage des Produktes beträgt 217,4 g.

Mit ¹³C-NMR-Spektroskopie wird ein mittlerer Umesterungsgrad von 1 ermittelt (35% Si-(OCH(CH₃)-CH₂)₅-O-C₁₂H₂₅ vs. 65 % Si-OEt Funktionalitäten).

### Beispiel 18

### NCS-CH₂-CH₂-CH₂-Si (OEt) ₂ (OCH₂-CH₂) ₅-O-C₁₃H₂₇

In einer Vakuumdestillationsapparatur werden 100 g NCS-CH₂-CH₂-CH₂-Si (OEt)₃ , 161, 4 g Polyethylenglykolmonotridecylether (H-(OCH₂-CH₂)₅-O-C₁₃H₂₇, Lutensol TO 5 (Firma BASF AG) und 0,05 g Ti(OBu)₄ gemischt. Die Mischung wird auf 146°C erhitzt und der Druck von 600 mbar innerhalb von 4 h auf 100 mbar gesenkt. Der freiwerdende, flüchtige Alkohol wird abdestilliert. Anschließend wird die Mischung für 6 h auf 141°C bei 50 mbar erhitzt. Nach Beendigung der Umsetzung wird das erhaltene Produkt auf Raumtemperatur abgekühlt.

Die Auswaage des Produktes beträgt 239 g.

Mit ¹³C-NMR-Spektroskopie wird ein mittlerer Umesterungsgrad von 1 ermittelt (30,6% Si-(OCH₂-CH₂)₅-O-C₁₂H₂₅ vs. 69,4 % Si-OEt Funktionalitäten) .

### Beispiel 19

### C₇H₁₅C (=0) -S-CH₂-CH₂-CH₂-Si (OEt) ₂ [(OCH₂-CH₂) ₅-O-C₁₃H₂₇]

In einem Vierhalskolben mit Rückflußkühler werden unter Schutzgas 150 g HS-CH₂-CH₂-CH₂-Si (OEt)₂ (OCH₂-CH₂)₅-O-C₁₃H₂₇ und 500 ml Heptan bei 5°C vorgelegt. Anschließend werden 26,3 g Triethylamin langsam zugetropft. Nach dem Zutropfen wird für 10 min bei 5°C gerührt und dann 38,3 g Oktansäurechlorid langsam so zugetopft, dass die Innentemperatur nicht über 8°C steigt. Die Suspension wird für 90 min bei 5-20°C gerührt und anschließend für 90 min am Rückfluß gekocht. Die Suspension wird abgekühlt, der Feststoff abfiltriert. Das abgetrennte Salz wird mit 100 ml Heptan gewaschen. Das gesamte Filtrat wird bei 65°C am Rotationsverdampfer vom Lösungsmittel befreit. Die Auswaage an Produkt beträgt 161,3 g.

Mit ¹³C-NMR-Spektroskopie wird ein mittlerer Umesterungsgrad von 1 ermittelt (32% Si-(OCH₂-CH₂)₅-O-C₁₃H₂₇ vs. 68 % Si-OEt Funktionalitäten).

### Beispiel 20

### NCS-CH₂-CH₂-CH₂-Si (OEt) [(OCH₂-CH₂)₅-O-C₁₃H₂₇]₂

In einer Vakuumdestillationsapparatur werden 101 g NCS-CH₂-CH₂-CH₂-Si(OEt)₃, 322,5 g Polyethylenglykolmonotridecylether (H- (OCH₂-CH₂)₅-O-C₁₃H₂₇, Lutensol TO 5 (Firma BASF AG) und 0,05 g Ti(OBu)₄ gemischt. Die Mischung wird auf 144°C erhitzt und der Druck von 800 mbar innerhalb von 4 h auf 100 mbar gesenkt. Der freiwerdende, flüchtige Alkohol wird abdestilliert. Anschließend wird die Mischung für 6 h auf 144°C bei 50 mbar erhitzt. Nach Beendigung der Umsetzung wird das erhaltene Produkt auf Raumtemperatur abgekühlt.

Die Auswaage des Produktes beträgt 376,6 g.

Mit ¹³C-NMR-Spektroskopie wird ein mittlerer Umesterungsgrad von 2 ermittelt (66 % Si-(OCH₂-CH₂)₅-O-C₁₂H₂₅ vs. 34 % Si-OEt Funktionalitäten).

### Beispiel 21

### C₇H₁₅C (=O) -S-CH₂-CH₂-CH₂-Si (OEt) [(OCH₂-CH₂)₅-O-C₁₃H₂₇]₂

In einem Vierhalskolben mit Rückflußkühler werden unter Schutzgas 200 g HS-CH₂-CH₂-CH₂-Si (OEt) [(OCH₂-CH₂) ₅-O-C₁₃H₂₇]₂ und 500 ml Heptan bei 5°C vorgelegt. Anschließend werden 22,3 g Triethylamin langsam zugetropft. Nach dem Zutropfen wird für 10 min bei 5°C gerührt und dann 32,7 g Oktansäurechlorid langsam so zugetopft, dass die Innentemperatur nicht über 8°C steigt. Die Suspension wird für 90 min bei 5-20°C gerührt und anschließend für 90 min am Rückfluß gekocht. Die Suspension wird abgekühlt, der Feststoff abfiltriert. Das abgetrennte Salz wird mit 100 ml Heptan gewaschen. Das gesamte Filtrat wird bei 65°C am Rotationsverdampfer vom Lösungsmittel befreit.

Die Auswaage an Produkt beträgt 211,4 g.

Mit ¹³C-NMR-Spektroskopie wird für das Produkt ein mittlerer Umesterungsgrad von 2 ermittelt (67% Si-(OCH₂-CH₂)₅-O-C₁₃H₂₇ vs. 33 % Si-OEt Funktionalitäten) .

### Beispiel 22

In diesem Beispiel werden erfindungsgemäße Silane der allgemeinen Formel I mit substituierten Mercaptogruppen eingesetzt, d.h. mit R⁴ gleich CN oder (C=O)-R⁹, die am Silicium mit einer Alkylpolyethergruppe substituiert sind.

Es wird die Beispielmischung VII, enthaltend das erfindungsgemäße Silan aus Beispiel 18 und die Beispielmischung VIII, enthaltend das erfindungsgemäße Silan aus Beispiel 19, mit Mischungen, enthaltend Silane, die dem Stand der Technik entsprechen verglichen.

Für die Referenzmischung X wird Si 69 verwendet. Bei dem für die Referenzmischung XI verwendeten Silan handelt es sich wieder um das Silan aus Beispiel 2.

Die für die Kautschukmischungen verwendete Rezeptur ist in der folgenden Tabelle 13 angegeben. Dabei bedeutet wieder die Einheit phr Gewichtsanteile bezogen auf 100 Teile des eingesetzten Rohkautschuks.

**Tabelle 13**

| Substanz | Menge [phr] | Menge [phr] | Menge [phr] | Menge [phr] |
|---|---|---|---|---|
| 1. Stufe | Referenz-mischung X | Referenz-mischung XI | Beispiel-mischung VII | Beispiel-mischung VIII |
| Buna VSL 5025-1 | 96 | 96 | 96 | 96 |
| Buna CB 24 | 30 | 30 | 30 | 30 |
| Ultrasil 7000GR | 80 | 80 | 80 | 80 |
| ZnO | 3 | 3 | 3 | 3 |
| Stearinsäure | 2 | 2 | 2 | 2 |
| Naftolen ZD | 10 | 10 | 10 | 10 |
| Vulkanox 4020 | 1,5 | 1,5 | 1,5 | 1,5 |
| Protector G3108 | 1 | 1 | 1 | 1 |
| Si 69 | 6, 4 | - | - | - |
| Silan aus Beispiel 2 | - | 6,4 | - | - |
| Silan aus Beispiel 18 | - | - | 6,4 | - |
| Silan aus Beispiel 19 | - | - | - | 6,4 |

| 2. Stufe | | | | |
|---|---|---|---|---|
| Batch Stufe 1 | | | | |

| 3. Stufe | | | | |
|---|---|---|---|---|
| Batch Stufe 2 | | | | |
| Vulkacit D | 2 | 0,25 | 0,25 | 0,25 |
| Perkacit TBzTD | 0,2 | 0,5 | 0,5 | 0,5 |
| Vulkacit CZ | 1,5 | 1,5 | 1,5 | 1,5 |
| Schwefel | 1,5 | 2,2 | 2,2 | 2,2 |

Die Kautschukmischung wird dreistufig in einem Innenmischer gemäß Tabelle 2 hergestellt.
Die gummitechnische Prüfung erfolgt gemäß den in Tabelle 3 angegebenen Prüfmethoden. Die Ergebnisse sind in Tabelle 14 gezeigt.

**Tabelle 14**

| **Rohmischungsdaten** | | | | | |
|---|---|---|---|---|---|
| Merkmal: | Einheit: | Referenz-mischung X | Referenz-mischung XI | Beispiel-mischung VII | Beispiel-mischung VIII |
| ML(1+4) bei 100°C, 3.Stufe | [ME] | 74 | 96 | 85 | 84 |
| Dmax-Dmin | [dNm] | 18,79 | 22,92 | 22,83 | 28,25 |
| t 10% | [min] | 1,21 | 0,66 | 0,46 | 0,54 |
| t 80%-t20% | [min] | 3,41 | 2,07 | 1,94 | 2,51 |
| Scorch-Zeit, t5 | [min] | 31,55 | 6,00 | 37,33 | 43,73 |
| Scorch-Zeit, t35 | [min] | 43,78 | 8,08 | 43,21 | 49,27 |

| **Vulkanisatdaten** | | | | | |
|---|---|---|---|---|---|
| Merkmal: | Einheit: | | | | |
| Zugfestigkeit | [MPa] | 13,70 | 11,40 | 12,70 | 11,60 |
| Spannungswert 100% | [MPa] | 1,80 | 1,90 | 2,10 | 2,10 |
| Spannungswert 300% | [MPa] | 8,90 | 10,60 | 9,70 | 9,10 |
| Spannungswert 300%/100% | [-] | 4,94 | 5,58 | 4,62 | 4,33 |
| Bruchdehnung | [%] | 398 | 308 | 356 | 357 |
| Shore-A-Härte | [SH] | 65 | 61 | 69 | 70 |
| Ball-Rebound, 60°C | [%] | 61,1 | 70,3 | 65,1 | 63,7 |
| DIN-Abrieb | [mm³] | 99 | 61 | 104 | 111 |
| Dyn. Dehnmodul E*, 0°C | [MPa] | 22,4 | 14,2 | 26,3 | 26,9 |
| Dyn. Dehnmodul E*, 60°C | [MPa] | 13,0 | 11,8 | 15,8 | 15,8 |
| Verlustfaktor tan δ, 0°C | [-] | 0,525 | 0,412 | 0,449 | 0,442 |
| Verlustfaktor tan δ, 60°C | [-] | 0,120 | 0,085 | 0,096 | 0,094 |

Es zeigt sich wieder, dass die mit dem nicht erfindungsgemäßen Mercaptosilan nach dem Stand der Technik hergestellte Referenzmischung XI bei den hier verwendeten Mischbedingungen gegenüber der mit dem handelsüblichen Si 69 hergestellten Referenzmischung X zwar Vorteile in den Vulkanisatdaten aufweist, aber, wie die extrem kurze Mooney-Scorch-Zeit zeigt, kommerziell nicht verarbeitbar ist. Nur die mit den erfindungsgemäßen Silanen hergestellten Beispielmischungen VII und VIII weisen ein hohes Potential der Vulkanisatdaten bei gleichzeitig gewährleisteter Verarbeitung auf. Die Mooney-Scorch-Zeiten liegen im Bereich der mit dem handelsüblichen Si 69 hergestellten Referenzmischung X. Beispielmischung VIII übertrifft diese sogar. DIN-Abrieb und Spannungswert 300% stimmen ebenfalls mit denen von Referenzmischung X überein, während der niedrige Wert für tan δ, 60°C den erniedrigten Hystereseverlust zeigt.

### Beispiel 23

In diesem Beispiel werden erfindungsgemäße Silane der allgemeinen Formel I mit substituierten Mercaptogruppen eingesetzt, d.h. mit R⁴ gleich CN oder (C=O)-R⁹, die am Silicium mit zwei Alkylpolyethergruppen substituiert sind.

Es wird die Beispielmischung IX, enthaltend das erfindungsgemäße Silan aus Beispiel 20 und die Beispielmischung X, enthaltend das erfindungsgemäße Silan aus Beispiel 21, mit Mischungen, enthaltend Silane, die dem Stand der Technik entsprechen verglichen.

Für die Referenzmischung XII wird Si 69 verwendet. Bei dem für die Referenzmischung XIII verwendeten Silan handelt es sich wieder um das Silan aus Beispiel 2.

Die für die Kautschukmischungen verwendete Rezeptur ist in der folgenden Tabelle 15 angegeben. Dabei bedeutet wieder die Einheit phr Gewichtsanteile bezogen auf 100 Teile des eingesetzten Rohkautschuks.

**Tabelle 15**

| Substanz | Menge [phr] | Menge [phr] | Menge [phr] | Menge [phr] |
|---|---|---|---|---|
| 1. Stufe | Referenz-mischung XII | Referenz-mischung XIII | Beispiel-mischung IX | Beispiel-mischung X |
| Buna VSL 5025-1 | 96 | 96 | 96 | 96 |
| Buna CB 24 | 30 | 30 | 30 | 30 |
| Ultrasil 7000GR | 80 | 80 | 80 | 80 |
| ZnO | 3 | 3 | 3 | 3 |
| Stearinsäure | 2 | 2 | 2 | 2 |
| Naftolen ZD | 10 | 10 | 10 | 10 |
| Vulkanox 4020 | 1,5 | 1,5 | 1,5 | 1,5 |
| Protector G3108 | 1 | 1 | 1 | 1 |
| Si 69 | 10 | - | - | - |
| Silan aus Beispiel 2 | - | 10 | - | - |
| Silan aus Beispiel 20 | - | - | 10 | - |
| Silan aus Beispiel 21 | - | - | - | 10 |

| 2. Stufe | | | | |
|---|---|---|---|---|
| Batch Stufe 1 | | | | |

| 3. Stufe | | | | |
|---|---|---|---|---|
| Batch Stufe 2 | | | | |
| Vulkacit D | 2 | 0,25 | 0,25 | 0,25 |
| Perkacit TBzTD | 0,2 | 0,5 | 0,5 | 0,5 |
| Vulkacit CZ | 1,5 | 1,5 | 1,5 | 1,5 |
| Schwefel | 1,5 | 2,2 | 2,2 | 2,2 |

Die Kautschukmischung wird dreistufig in einem Innenmischer gemäß Tabelle 2 hergestellt.
Die gummitechnische Prüfung erfolgt gemäß den in Tabelle 3 angegebenen Prüfmethoden. Die Ergebnisse sind in Tabelle 16 gezeigt.

**Tabelle 16**

| **Rohmischungsdaten** | | | | | |
|---|---|---|---|---|---|
| Merkmal: | Einheit: | Referenz-mischung XII | Referenz-mischung XIII | Beispiel-mischung IX | Beispiel-mischung X |
| ML(1+4) bei 100°C, 3.Stufe | [ME] | 66 | 99 | 65 | 65 |
| Dmax-Dmin | [dNm] | 21,61 | 14,85 | 23,53 | 24,83 |
| t 10% | [min] | 1,40 | 0,56 | 1,78 | 1,73 |
| t 80% - t 20% | [min] | 3,39 | 5,47 | 1,87 | 2,56 |
| Scorch-Zeit, t5 | [min] | 26,15 | 2,67 | 49,16 | 47,70 |
| Scorch-Zeit, t35 | [min] | 34,32 | 4,39 | 55,29 | 55,53 |

| **Vulkanisatdaten** | | | | | |
|---|---|---|---|---|---|
| Merkmal: | Einheit: | | | | |
| Zugfestigkeit | [MPa] | 9,20 | 9,00 | 11,90 | 11,10 |
| Spannungswert 100% | [MPa] | 2,40 | 1,80 | 1,90 | 2,10 |
| Spannungswert 300% | [MPa] | - | - | 8,90 | 9,30 |
| Spannungswert 300%/100% | [-] | - | - | 4,68 | 4,43 |
| Bruchdehnung | [%] | 256 | 256 | 367 | 340 |
| Shore-A-Härte | [SH] | 68 | 56 | 66 | 68 |
| Ball-Rebound, 60°C | [%] | 62,5 | 73,1 | 65,6 | 64,5 |
| DIN-Abrieb | [mm³] | 93 | 55 | 104 | 113 |
| Dyn. Dehnmodul E*, 0°C | [MPa] | 27,2 | 11,1 | 16,5 | 17,3 |
| Dyn. Dehnmodul E*, 60°C | [MPa] | 15,6 | 12,4 | 15,9 | 16,5 |
| Verlustfaktor tan δ, 0°C | [-] | 0,495 | 0,381 | 0,449 | 0,447 |
| Verlustfaktor tan δ, 60°C | [-] | 0,107 | 0,082 | 0,085 | 0,095 |

Es ergibt sich wieder das bekannte Bild. Die mit dem nicht erfindungsgemäßen Mercaptosilan nach dem Stand der Technik hergestellte Referenzmischung XIII weist bei den hier verwendeten Mischbedingungen gegenüber der mit dem handelsüblichen Si 69 hergestellten Referenzmischung XII Vorteile in den Vulkanisatdaten auf, ist aber auch bei der in diesem Vergleich verwendeten Einsatzmenge kommerziell nicht verarbeitbar. Die hohe Mooney-Viskosität und die extrem kurzen Scorch-Zeiten lassen auf Probleme beim Mischen und Extrudieren schließen, während die kurze t10%-Zeit auf erschwertes Vulkanisieren rückschließen läßt. Die Rohmischungsdaten der erfindungsgemäßen Beispielmischungen IX und X liegen auf dem Niveau der mit dem handelsüblichen Si 69 hergestellten Referenzmischung XII bzw. übertreffen diese in den Mooney-Scorch-Zeiten sogar. Eine großtechnische Verarbeitbarkeit ist sichergestellt. Erneut weisen die Vulkanisatdaten der Beispielmischungen IX und X im Vergleich zur Referenzmischung XII ein hohes Potential auf und zeigen mit den erniedrigten tan δ, 60°C Werten signifikante Vorteile im Hystereseverlust.

## Patentansprüche

1. Mercaptosilane der allgemeinen Formel I 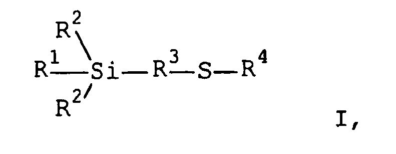 wobei R¹ eine Alkylpolyethergruppe -O-(R⁵-O)ₘ-R⁶ ist, mit R⁵ gleich oder verschieden, eine verzweigte oder unverzweigte, gesättigte oder ungesättigte, aliphatische zweibindige C1-C30 Kohlenwasserstoffgruppe, m im Mittel 1 bis 30, und R⁶ aus mindestens 11 C-Atomen besteht und eine unsubstituierte oder substituierte, verzweigte oder unverzweigte einbindige Alkyl-, Alkenyl, Aryl oder Aralkylgruppe ist,
R² verschieden und eine R¹-, C1-C12-Alkyl- oder R⁷O-Gruppe ist oder R² gleich und C1-C12-Alkyl- oder R⁷ O-Gruppe ist, mit R⁷ gleich H, Ethyl, Propyl, C9-C30 verzweigten oder unverzweigten einbindigen Alkyl-, Alkenyl-, Aryl-, Aralkylgruppe oder (R⁸)₃Si-Gruppe, mit R⁸ gleich C1-C30 verzweigte oder unverzweigte Alkyl- oder Alkenyl-Gruppe,
R³ eine verzweigte oder unverzweigte, gesättigte oder ungesättigte, aliphatische, aromatische oder gemischt aliphatische /aromatische zweibindige C1-C30 Kohlenwasserstoffgruppe und
R⁴ gleich H ist.

2. Mercaptosilane gemäß Anspruch 1, **dadurch gekennzeichnet, daß** diese ein Gemich aus Mercaptosilanen der allgemeinen Formel I sind und R¹ eine Molekulargewichtsverteilung aufweist.

3. Mercaptosilane gemäß Anspruch 1 und 2, **dadurch gekennzeichnet, daß** R⁶ C₁₃H₂₇ ist.

4. Mercaptosilane gemäß Anspruch 1, **dadurch gekennzeichnet, daß** diese ein Gemisch von Mercaptosilanen der allgemeinen Formel I sind und 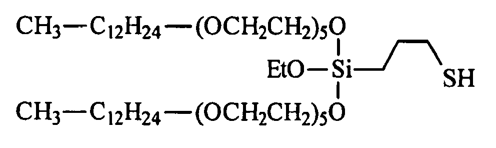 und/oder 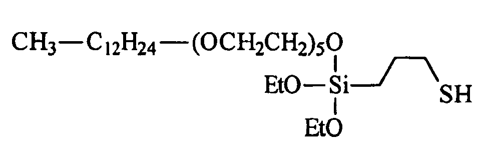 und Hydrolyse- und/oder Kondensationsprodukte der vorgenannten Verbindungen enthalten.

5. Mercaptosilane gemäß Anspruch 1, **dadurch gekennzeichnet, daß** R² verschieden und eine R¹-, C1-C12-Alkyl- oder R⁷O-Gruppe ist und R¹ gleich
-O- (C₂H₄-O) 5-C₁₁H₂₃, -O- (C₂H₄-O) ₅-C₁₂H₂₅, -O- (C₂H₄-O) ₅-C₁₃H₂₇, -O- (C₂H₄-O) ₅-C₁₄H₂₉, -O- (C₂H₄-O) ₅-C₁₅H₃₁, -O-(C₂H₄-O)₃-C₁₃H₂₇, -O-(C₂H₄-O)₄-C₁₃H₂₇, -O- (C₂H₄-O)₆-C₁₃H₂₇, -O-(C₂H₄-O)₇-C₁₃H₂₇, -O- (CH₂CH₂-O) ₅- (CH₂) ₁₀CH₃, -O-(CH₂CH₂-O)₅-(CH₂)₁₁CH₃, -O-(CH₂CH₂-O)₅-(CH₂)₁₂CH₃, -O-(CH₂CH₂-O)₅-(CH₂)₁₃CH₃,-O-(CH₂CH₂-O)₅-(CH₂)₁₄CH₃, -O-(CH₂CH₂-O)₃-(CH₂)₁₂CH₃, -0-(CH₂CH₂-O) ₄- (CH₂) ₁₂CH₃, -O- (CH₂CH₂-O) ₆- (CH₂) ₁₂CH₃, -0-(CH₂CH₂-O) ₇- (CH₂) ₁₂CH₃, 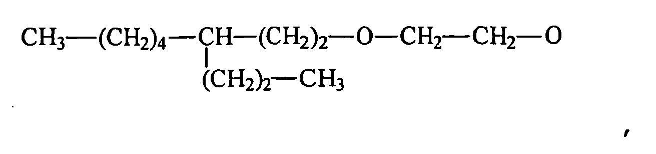 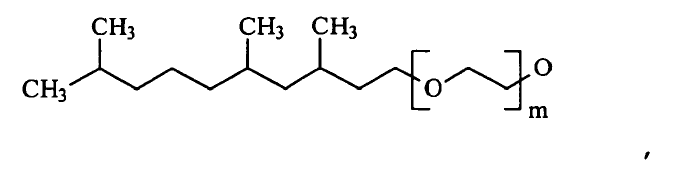 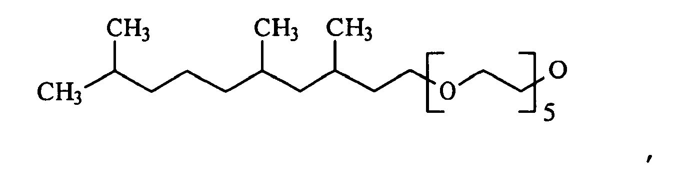 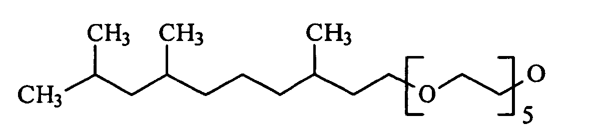 oder 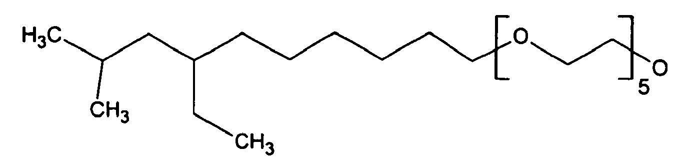 ist.

6. Mercaptosilane gemäß Anspruch 1 bis 5, **dadurch gekennzeichnet, daß** diese auf einen inerten organischen oder anorganischen Träger aufgezogen oder mit einem organischen oder anorganischen Träger vorreagiert sind.

7. Verfahren zur Herstellung der Mercaptosilane gemäß Anspruch 1 bis 5, **dadurch gekennzeichnet, daß** man Silane der allgemeinen Formel II 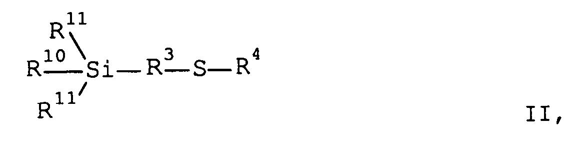 wobei R¹⁰ eine R⁷O-Gruppe ist und R⁷ die oben angegebene Bedeutung hat,
R¹¹ gleich oder verschieden und eine R¹⁰- oder C1-C12-Alkyl-Gruppe ist,
R³ und R⁴ die oben angegebene Bedeutung haben,
mit einem alkoxylierten Alkohol R¹-H, wobei R¹ die oben angegebene Bedeutung hat, unter Abspaltung von R⁷-OH katalysiert umgesetzt und R⁷-OH von dem Reaktionsgemisch kontinuierlich oder diskontinuierlich abtrennt.

8. Verfahren zur Herstellung der Mercaptosilane gemäß Anspruch 7, **dadurch gekennzeichnet, daß** der alkoxylierte Alkohol R¹-H ein ethoxylierter Alkohol ist.

9. Verfahren zur Herstellung der Mercaptosilane gemäß Anspruch 7, **dadurch gekennzeichnet, daß** der alkoxylierte Alkohol R¹-H ein propoxylierter Alkohol ist.

10. Kautschukmischungen, **dadurch gekennzeichnet, daß** diese
(A) einen Kautschuk oder eine Mischung von Kautschuken,
(B) einen Füllstoff,
(C) eine Mercaptosilane gemäß Anspruch 1 bis 6 enthalten.

11. Kautschukmischungen gemäß Anspruch 10, **dadurch gekennzeichnet, daß** diese
(D) ein Thiuramsulfid- und/oder Carbamatbeschleuniger und/oder die entsprechenden Zinksalze,
(E) ein stickstoffhaltigen Co-Aktivator,
(F) gegebenenfalls weitere Kautschukhilfsmittel und
(G) gegebenenfalls weitere Beschleuniger
enthalten und das Gewichtsverhältnis Beschleuniger (D) zu stickstoffhaltigem Co-Aktivator (E) gleich oder größer 1 ist.

12. Verfahren zur Herstellung der Kautschukmischungen gemäß den Ansprüchen 10 und 11, **dadurch gekennzeichnet, daß** man den Kautschuk oder die Mischung von Kautschuken, den Füllstoff, gegebenenfalls weitere Kautschukhilfsmittel, sowie mindestens ein Mercaptosilan gemäß Anspruch 1 in einem Mischaggregat mischt.

13. Verwendung von Mercaptosilanen gemäß Anspruch 1 bis 6 zur Herstellung von Formkörpern.

14. Verwendung von Mercaptosilanen gemäß Anspruch 1 bis 6 in Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

## Claims

1. Mercaptosilanes of the general formula I 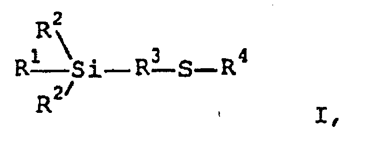 wherein R¹ is an alkyl polyether group -O-(R⁵-O)ₘ-R⁶, where R⁵ is identical or different and is a branched or unbranched, saturated or unsaturated, aliphatic divalent C1-C30 hydrocarbon group, m is on average 1 to 30, and R⁶ comprises at least 11 C atoms and is an unsubstituted or substituted, branched or unbranched monovalent alkyl, alkenyl, aryl or aralkyl group,
R² is different and is an R¹, C1-C12 alkyl or R⁷O group, or R² is identical and is an C1-C12 alkyl or R⁷O group, where R⁷ is H, ethyl, propyl, a C9-C30 branched or unbranched monovalent alkyl, alkenyl, aryl or aralkyl group or (R⁸)₃Si group, where R⁸ is a C1-C30 branched or unbranched alkyl or alkenyl group,
R³ is a branched or unbranched, saturated or unsaturated, aliphatic, aromatic or mixed aliphatic/aromatic divalent C1-C30 hydrocarbon group and
R⁴ is H.

2. Mercaptosilanes according to claim 1, **characterized in that** they are a mixture of mercaptosilanes of the general formula I and R¹ has a molecular weight distribution.

3. Mercaptosilanes according to claim 1 and 2, **characterized in that** R⁶ is C₁₃H₂₇.

4. Mercaptosilanes according to claim 1, **characterized in that** they are a mixture of mercaptosilanes of the general formula (I) and comprise 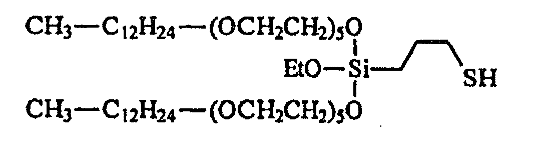 and/or 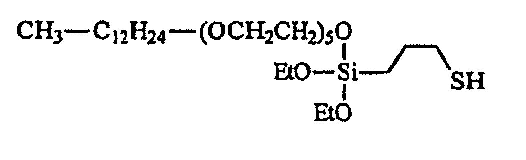 and hydrolysis and/or condensation products of the aforementioned compounds.

5. Mercaptosilanes according to claim 1, **characterized in that** R² is different and is an R¹, C1-C12 alkyl or R⁷O group and R¹ is
-O- (C₂H₄-O) ₅-C₁₁H₂₃, -O- (C₂H₄-O) ₅-C₁₂H₂₅,
-O- (C₂H₄-O) ₅-C₁₃H₂₇, -O- (C₂H₄-O) ₅-C₁₄H₂₉,
-O- (C₂H₄-O) ₅-C₁₅H₃₁, -O- (C₂H₄-O) ₃-C₁₃H₂₇,
-O- (C₂H₄-O) ₄-C₁₃H₂₇, -O- (C₂H₄-O) ₆-C₁₃H₂₇,
-O- (C₂H₄-O) ₇-C₁₃H₂₇, -O- (CH₂CH₂-O) ₅- (CH₂) ₁₀CH₃,
-O- (CH₂CH₂-O) ₅- (CH₂) ₁₁CH₃, -O- (CH₂CH₂-O) ₅- (CH₂) ₁₂CH₃,
-O- (CH₂CH₂-O) ₅- (CH₂) ₁₃CH₃, -O- (CH₂CH₂-O) ₅- (CH₂) ₁₄CH₃,
-O- (CH₂CH₂-O) ₃- (CH₂) ₁₂CH₃, -O- (CH₂CH₂-O) ₄- (CH₂) ₁₂CH₃,
-O- (CH₂CH₂-O) ₆- (CH₂) ₁₂CH₃, -O- (CH₂CH₂-O) ₇- (CH₂) ₁₂CH₃, 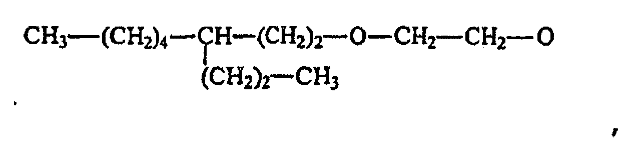 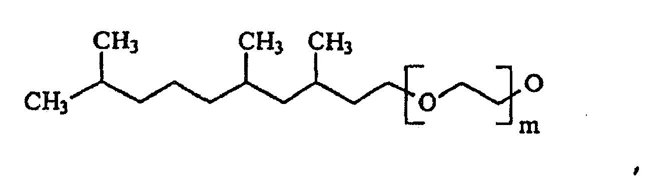 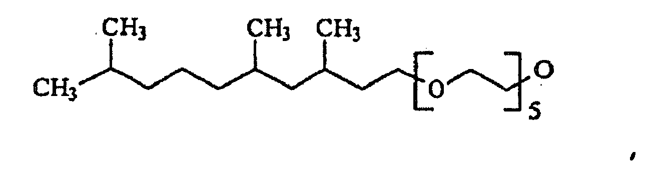 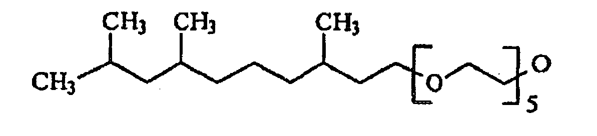 or

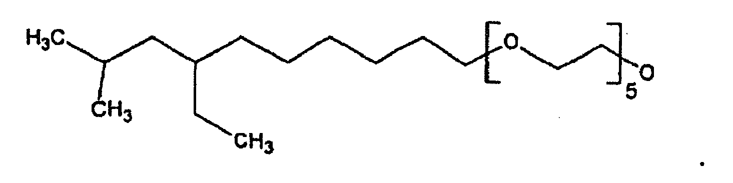

6. Mercaptosilanes according to claim 1 to 5, **characterized in that** they have been applied to an inert organic or inorganic support or have been pre-reacted with an organic or inorganic support.

7. Process for the preparation of the mercaptosilanes according to claim 1 to 5, **characterized in that** silanes of the general formula II 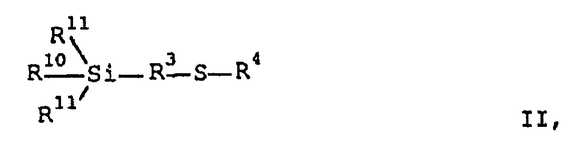 wherein R¹⁰ is an R⁷O group and R⁷ has the abovementioned meaning,
R¹¹ is identical or different and is an R¹⁰ or C1-C12 alkyl group,
R³ and R⁴ have the abovementioned meaning,
are catalytically reacted with an alkoxylated alcohol R¹-H, wherein R¹ has the abovementioned meaning, splitting off R⁷-OH, and separating R⁷-OH off from the reaction mixture continuously or discontinuously.

8. Process for the preparation of the mercaptosilanes according to claim 7, **characterized in that** the alkoxylated alcohol R¹-H is an ethoxylated alcohol.

9. Process for the preparation of the mercaptosilanes according to claim 7, **characterized in that** the alkoxylated alcohol R¹-H is a propoxylated alcohol.

10. Rubber compounds **characterized in that** they comprise
(A) a rubber or a mixture of rubbers,
(B) a filler,
(C) a mercaptosilane according to claim 1 to 6.

11. Rubber compounds according to claim 10, **characterized in that** they comprise
(D) a thiuram sulfide and/or carbamate accelerator and/or the corresponding zinc salts,
(E) a nitrogen-containing co-activator,
(F) optionally further rubber auxiliaries and
(G) optionally further accelerators
and the weight ratio of accelerator (D) to nitrogen-containing co-activator (E) is equal to or greater than 1.

12. Process for the preparation of the rubber compounds according to claims 10 and 11, **characterized in that** the rubber or mixture of rubbers, the filler, optionally further rubber auxiliaries and at least one mercaptosilane according to claim 1 are mixed in a mixing unit.

13. Use of mercaptosilanes according to claim 1 to 6 for the production of shaped articles.

14. Use of mercaptosilanes according to claim 1 to 6 in pneumatic tires, tire treads, cable sheathings, hoses, drive belts, conveyor belts, roller coverings, tires, shoe soles, sealing rings and damping elements.

## Revendications

1. Mercaptosilanes de formule générale I 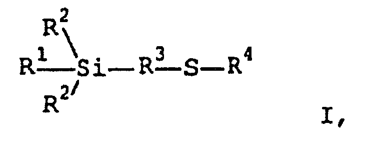 dans laquelle R¹ est un groupe alkylpolyéther -O-(R⁵-O)ₘ-R⁶, les radicaux R⁵ étant identiques ou différents, un groupe hydrocarboné aliphatique en C₁-C₃₀ divalent, ramifié ou non ramifié, saturé ou insaturé, m allant en moyenne de 1 à 30, et R⁶ étant constitué d'au moins 11 atomes de carbone et étant un groupe alkyle, alcényle, aryle ou aralkyle monovalent, substitué ou non substitué, ramifié ou non ramifié,
les radicaux R² sont différents et représentent un groupe R¹, alkyle en C₁-C₁₂ ou R⁷O, ou bien les radicaux R² sont identiques et représentent un groupe alkyle en C₁-C₁₂ ou R⁷O, R⁷ représentant H, un groupe éthyle, propyle, un groupe alkyle, alcényle, aryle, aralkyle en C₉-C₃₀ monovalent, ramifié ou non ramifié, ou un groupe (R⁸) ₃Si, R⁸ étant un groupe alkyle ou alcényle en C₁-C₃₀, ramifié ou non ramifié,
R³ est un groupe hydrocarboné en C₁-C₃₀ divalent, aliphatique, aromatique ou mixte aliphatique/aromatique, ramifié ou non ramifié, saturé ou insaturé, et
R⁴ est H.

2. Mercaptosilanes selon la revendication 1, **caractérisés en ce qu'**ils consistent en un mélange de mercaptosilanes de formule générale I et R¹ présente une distribution de masse moléculaire.

3. Mercaptosilanes selon la revendication 1 ou 2 **caractérisés en ce que** R⁶ est C₁₃H₂₇.

4. Mercaptosilanes selon la revendication 1, **caractérisés en ce qu'**ils contiennent un mélange de mercaptosilanes de formule générale I et 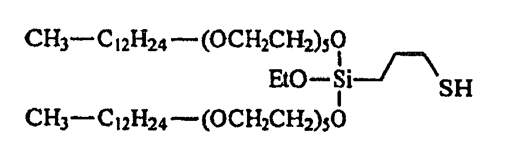 et/ou 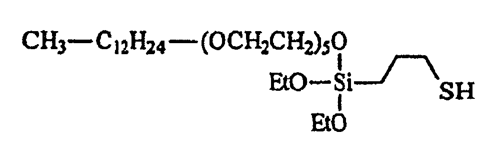 et contiennent des produits d'hydrolyse et/ou de condensation des composés précités.

5. Mercaptosilanes selon la revendication 1, **caractérisés en ce que** les radicaux R² sont différents et représentent un groupe R¹, alkyle en C₁-C₁₂ ou R⁷O, et R¹ représente un groupe
-0- (C₂H₄-O)₅-C₁₁H₂₃, -0- (C₂H₄-O)₅-C₁₂H₂₅,
-O-(C₂H₄-O)₅-C₁₃H₂₇, -O-(C₂H₄-O)₅-C₁₄H₂₉,
-O-(C₂H₄-O)₅-C₁₅H₃₁, -O-(C₂H₄-O)₃-C₁₃H₂₇,
-O-(C₂H₄-O)₄-C₁₃H₂₇, -O- (C₂H₄-O)₆-C₁₃H₂₇,
-O-(C₂H₄-O)₇-C₁₃H₂₇, -O- (CH₂CH₂-O)₅- (CH₂)₁₀CH₃,
-O-(CH₂CH₂-O) ₅-(CH₂) ₁₁CH₃, -O- (CH₂CH₂-O) ₅- (CH₂) ₁₂CH₃,
-O- (CH₂CH₂-O) ₅- (CH₂) ₁₃CH₃, -O- (CH₂CH₂-O) ₅- (CH₂) ₁₄CH₃,
-O- (CH₂CH₂-O)₃- (CH₂) ₁₂CH₃, -O- (CH₂CH₂-O) ₄- (CH₂)₁₂CH₃,
-O- (CH₂CH₂-O) ₆- (CH₂) ₁₂CH₃, -O- (CH₂CH₂-O) ₇- (CH₂)₁₂CH₃, 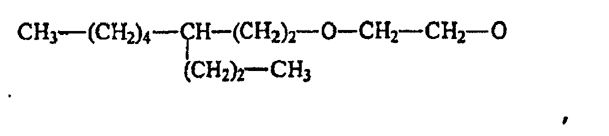 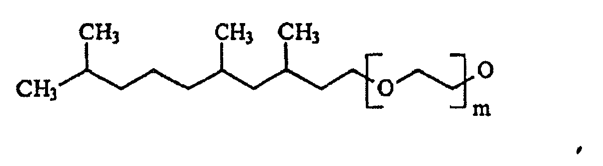 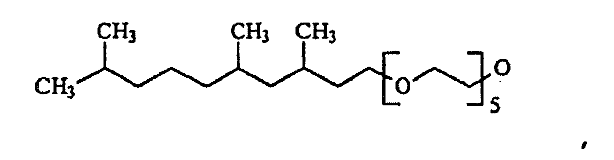 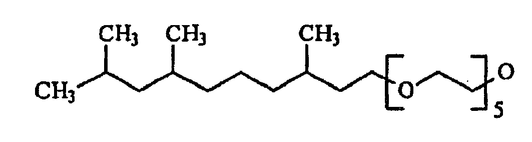 ou

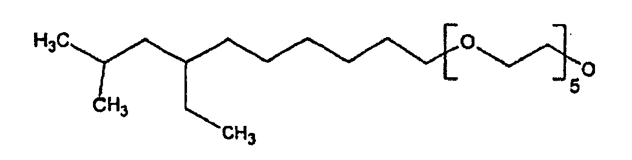

6. Mercaptosilanes selon l'une quelconque des revendications 1 à 5, **caractérisés en ce qu'**ils sont fixés sur un support organique ou inorganique inerte ou sont mis à réagir au préalable avec un support organique ou inorganique.

7. Procédé pour la préparation des mercaptosilanes selon l'une quelconque des revendications 1 à 5, **caractérisé en ce qu'**on fait réagir avec catalyse des silanes de formule générale II 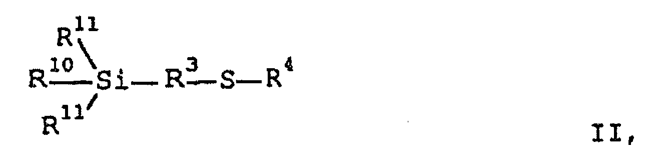 dans laquelle R¹⁰ est un groupe R⁷O et R⁷ a la signification donnée plus haut,
les radicaux R¹¹ sont identiques ou différents et représentent un groupe R¹⁰ ou alkyle en C₁-C₁₂,
R³ et R⁴ ont les significations données plus haut,
avec un alcool alcoxylé R¹-H, R¹ ayant la signification donnée plus haut, avec élimination de R⁷-OH, et R⁷-OH est séparé en continu ou en mode discontinu du mélange réactionnel.

8. Procédé pour la préparation des mercaptosilanes selon la revendication 7, **caractérisé en ce que** l'alcool alcoxylé R¹-H est un alcool éthoxylé.

9. Procédé pour la préparation des mercaptosilanes selon la revendication 7, **caractérisé en ce que** l'alcool alcoxylé R¹-H est un alcool propoxylé.

10. Compositions de caoutchouc, **caractérisées en ce qu'**elles contiennent
(A) un caoutchouc ou un mélange de caoutchoucs,
(B) une charge,
(C) un mercaptosilane selon l'une quelconque des revendications 1 à 6.

11. Compositions de caoutchouc selon la revendication 10, **caractérisés en ce qu'**elles contiennent
(D) un accélérateur carbamate et/ou sulfure de thiurame et/ou les sels de zinc correspondants,
(E) un co-activateur azoté,
(F) éventuellement un adjuvant pour caoutchouc et
(G) éventuellement d'autres accélérateurs
et le rapport pondéral de l'accélérateur (D) au co-activateur azoté (E) est égal ou supérieur à 1.

12. Procédé pour la préparation de compositions de caoutchouc selon les revendications 10 et 11, **caractérisé en ce qu'**on mélange dans un appareil de mélange le caoutchouc ou le mélange de caoutchoucs, la charge, éventuellement d'autres adjuvants pour caoutchouc, ainsi qu'au moins un mercaptosilane selon la revendication 1.

13. Utilisation de mercaptosilanes selon l'une quelconque des revendications 1 à 6, pour la fabrication de corps moulés.

14. Utilisation de mercaptosilanes selon l'une quelconque des revendications 1 à 6, dans des pneumatiques à air, des bandes de roulement de pneumatiques, des gaines de câbles, des tuyaux souples, des courroies d'entraînement, des bandes transporteuses, des revêtements de cylindres, des pneumatiques, des semelles de chaussures, des rondelles d'étanchéité et des éléments amortisseurs.
